# EUROPEAN PATENT APPLICATION

(11) **EP 2 128 573 A1**
(43) Date of publication of application: **02.12.2009**
(21) Application number: 08710388.3
(22) Date of filing: 15.02.2008
(51) Int. Cl.: G01F 1/692, G01F 1/684, G01F 1/696

(54) **SENSOR, SENSOR TEMPERATURE CONTROL METHOD AND ABNORMALITY RECOVERY METHOD**

(30) Priority: 28.02.2007 JP 2007049468
(71) Applicant: Yamatake Corporation, Tokyo 100-6419 (JP)
(72) Inventor: MORITA, Yasuji, Tokyo 100-6419 (JP); HATAKEYAMA, Hiroshi, Tokyo 100-6419 (JP); AOSHIMA, Shigeru, Tokyo 100-6419 (JP); MORIO, Shuji, Tokyo 100-6419 (JP); WARASHINA, Isamu, Tokyo 100-6419 (JP)
(74) Representative: Jacobson, Claude
(86) International application number: PCT/JP2008/000234
(87) International publication number: WO 2008/105144

(57) **Abstract**

A heater pattern (23) is arranged on at least one substrate among substrates configuring a package, and a temperature in the package is controlled by controlling a quantity of electricity carried to the heater pattern (23) corresponding to the ambient temperature of a sensor chip (5) in the package.

## Description

### FIELD OF TECHNOLOGY

The present invention relates to a flow sensor that is used in flow meters, to a sensor temperature controlling method, and to an abnormality recovering method.

### PRIOR ART

The flow speed sensor having the housing structure disclosed in Patent Reference 1 has a sensor chip built into a package that is layered together with a flat base member. In the base member, a flat trench-shaped flow path is provided in the sensor chip mounting surface of the base member, where the inlet and outlet of the flow path are formed in the opposite end surfaces of the package. Additionally, the sensor chip electrodes are connected electrically, through wire bonding or solder bumps, or the like, to electrodes that are formed integrally with the base member.

The thermal flow meter disclosed in Patent Reference 2 has a structure wherein a substrate whereon a sensor chip is mounted is tightly adhered to the inner wall of a pipe-shaped body. A trench is formed parallel to the mounting surface in the sensor chip or the substrate, and a sensor flow path is formed by a main flow path and the trench in the inside of the body.

Additionally, the flow sensor disclosed in Patent Reference 3 has a flow path formed on a sensor surface of a sensor chip through the provision of a sensor chip in a square hole in a base, and through the provision of a cover through disposition of a wiring substrate that is provided with a slit, or through the disposition of two wiring substrates that are facing each other across a gap. Note that the sensor chip electrodes and electrode pads for connecting to external circuitry, of the wiring substrate, are connected together using solder or an electrically conductive adhesive agent, or the like.

Furthermore, a gas sensor having a ceramic heater structure is disclosed in Patent Reference 4. The gas sensor as set forth in Patent Reference 4 is provided with a ceramic heater structure is structured through the provision of a heater portion having a heat-producing unit pattern built into the inside of an insulating ceramic unit, inside a ceramic substrate.

Patent Reference 1: Japanese Unexamined Patent Application Publication S60-220864
Patent Reference 2: Japanese Unexamined Patent Application Publication 2002-168669
Patent Reference 3: Japanese Unexamined Patent Application Publication 2006-118929
Patent Reference 4: Japanese Unexamined Patent Application Publication 2004-327255

In the conventional sensor, when there is no flow in the gas to be measured, and the gas is in the flow path, there is a problem in that condensation or moisture will adhere to the sensor chip surface, causing the output of the sensor to be unstable.

The sensor as set forth in Patent Reference 4 heats the sensor detecting portion up to the temperature required for measurement in the sensor structure (at least 300°C), but cannot perform temperature control in regards to adhered condensation or moisture.

The present invention is to solve the problem areas such as set forth above, and the object thereof is to provide a sensor, a temperature controlling method, and an aberration recovering method capable of preventing the adhesion of condensation or moisture to the sensor surface, and capable of increasing the sensor accuracy through controlling the ambient temperature so as to be uniform, even when there is no flow of the gas to be measured, and it is within the flow path.

### DISCLOSURE OF THE INVENTION

The sensor as set forth in the present invention comprises a sensor chip for detecting a physical quantity of a gas to be measured, and a package, structured by stacking a plurality of substrates, and having a flow path within the package wherein the gas to be measured is exposed to the sensor surface within the sensor chip.

In a sensor according to the present invention, the package is structured from stacking together a first flat substrate wherein a hole portion for housing a sensor chip is formed; a second flat substrate wherein hole portions are formed to form the flow path within the package for guiding, to the sensor chip, the gas to be measured; and a third flat substrate wherein hole portions are formed, on the same end surface of the package, for an inlet and outlet of the gas to be measured.

In a sensor according to the present invention, the package is structured by stacking, on a fourth flat substrate, a fifth flat substrate wherein a hole portion is formed to become a flow path within the package, for guiding the gas to be measured to the sensor chip, and a sixth flat substrate, having a step in an opening portion so that the sensor chip is fitted to the step so that the sensor surface will be on the flow path side within the package, so that the back surface of the sensor chip will be coplanar with the package end surface, and so that the opening portion that is not covered by the sensor chip will form hole portions that will be the inlet and the outlet for the gas to be measured, connected to the flow path within the package.

In the temperature controlling method of the sensor according to the present invention, the sensor set forth above is provided with a step for detecting the ambient temperature of the sensor chip in the package, and a step for controlling the temperature within the package through controlling the magnitude of the electric current to a heater pattern in accordance with the ambient temperature of the sensor chip.

In the aberration recovering method for a sensor as set forth in the present invention, the sensor set forth above is provided with a step for determining that there is condensation on the surface of the sensor, based on an output value that is obtained from the sensor chip within the package, and, when it has been determined that there is condensation on the sensor chip, a step for heating, for a predetermined time interval to a temperature that is higher than the normal set temperature, the package by controlling the magnitude of the electric current to the heater pattern, and a step for ensuring that the condensation has been eliminated, based on an output value that is obtained from the sensor chip that has returned to the set temperature after a predetermined amount of time has elapsed.

Given the present invention, a heater pattern is provided on at least one of the substrates, and thus there is the effect of being able to set a desired temperature within the package.

Given the present invention, the ambient temperature of the sensor chip within the package is detected, and the temperature within the package is controlled by controlling the magnitude of the electric current to a heater pattern in accordance with the ambient temperature of the sensor chip, and thus there is the effect of being able to increase the sensor accuracy by controlling the surrounding of the sensor to a predetermined temperature.

Given the present invention, there is a step for determining that there is condensation on the surface of the sensor, based on an output value that is obtained from the sensor chip within the package, and, when it has been determined that there is condensation on the sensor chip, a step for heating, for a predetermined time interval to a temperature that is higher than the normal set temperature, the package by controlling the magnitude of the electric current to the heater pattern, and a step for ensuring that the condensation has been eliminated, based on an output value that is obtained from the sensor chip that has returned to the set temperature after a predetermined amount of time has elapsed, and thus there is the effect of being able to recover from a condensation anomaly, through a simple method, even if there is condensation on the surface of the sensor.

### BRIEF DESCRIPTION OF THE DRAWINGS

FIG. 1 is an oblique view illustrating a sensor according to a first form of embodiment according to the present invention.
FIG. 2 is an oblique view illustrating the process for assembling the flow sensor in FIG. 1.
FIG. 3 is a cross-sectional diagram along the section A-A in FIG. 2.
FIG. 4 is a diagram illustrating the structure of the flow sensor according to the first form of embodiment and the structure of a conventional sensor.
FIG. 5 is a diagram illustrating an example of mounting the flow sensor according to the first form of embodiment.
FIG. 6 is a cross-sectional diagram along the section B-B in FIG. 5.
FIG. 7 is a diagram for explaining the sealed state in a conventional flow sensor.
FIG. 8 is a diagram illustrating another configuration of the flow sensor according to the first form of embodiment.
FIG. 9 is a diagram for explaining the structure of the flow sensor in FIG. 8.
FIG. 10 is a diagram illustrating another configuration of the flow sensor according to the first form of embodiment.
FIG. 11 is a top view diagram illustrating an example of a configuration for a flow path within the package of the flow sensor according to the first form of embodiment.
FIG. 12 is a diagram illustrating another example of a configuration of a flow path within the package of the flow sensor according to the first form of embodiment.
FIG. 13 is a diagram for explaining the dust-removal effect of the flow path in FIG. 12.
FIG. 14 is a diagram illustrating an example of a mounting configuration of a flow sensor according to the first form of embodiment.
FIG. 15 is a diagram illustrating another example of a configuration of a flow sensor according to the first form of embodiment.
FIG. 16 is a diagram explaining another example of a configuration of a flow sensor according to the first form of embodiment.
FIG. 17 is a diagram for explaining the state of use of the flow sensor in FIG. 15.
FIG. 18 is a cross-sectional diagram illustrating the sensor installation configuration in the flow sensor according to the first form of embodiment.
FIG. 19 is a diagram illustrating one structure of a spacer portion of a flow sensor according to the first form of embodiment.
FIG. 20 is a diagram illustrating another configuration of a spacer portion of a flow sensor according to the first form of embodiment.
FIG. 21 is a diagram illustrating the process for assembling a flow sensor using a substrate wherein a heater pattern has been formed.
FIG. 22 is a cross-sectional diagram illustrating a flow sensor having a heater pattern.
FIG. 23 is an oblique view of a sensor chip of a flow sensor.
FIG. 24 is a diagram illustrating the configuration of a temperature controlling device and a flow sensor controlling device for controlling a flow sensor having a heater pattern.

### MOST PREFERRED FORM FOR CARRYING OUT THE INVENTION

In order to explain the present invention in greater detail, a most preferred form for carrying out the invention will be explained below according to the appended drawings.

### FIRST FORM OF EMBODIMENT.

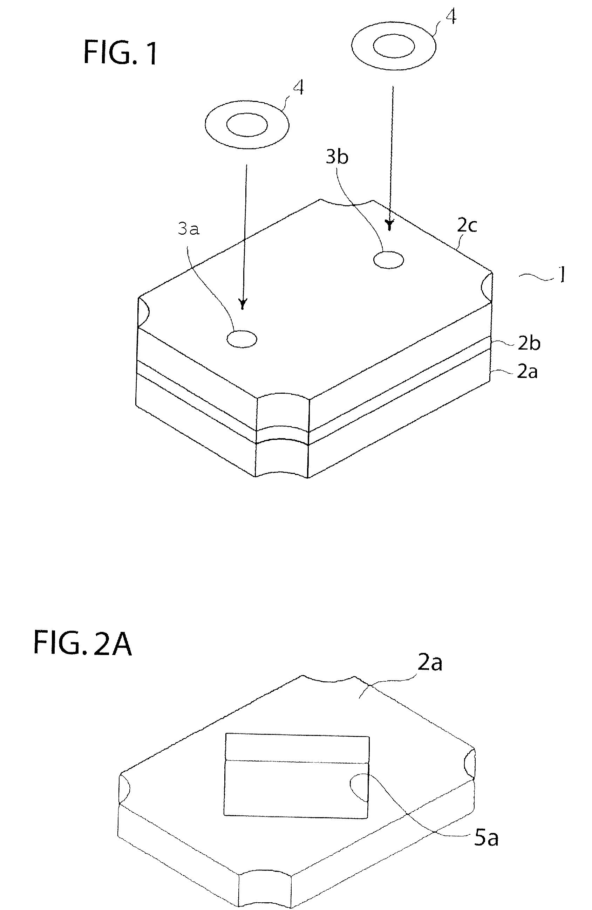

FIG. 1 is an oblique view illustrating a sensor according to a first form of embodiment according to the present invention, illustrating a flow sensor that is structured by a sensor chip housed in a package comprising three substrates connected together. As illustrated in FIG. 1, in the flow sensor 1 according to the first form of embodiment, ceramic substrates 2a, 2b, and 2c are sinter bonded together, a sensor chip is housed within the rectangular package that is thus formed, and both the inlet 3a and the outlet 3b of the flow path within the package, wherein the gas to be measured flows, are provided on the same flat end surface (substrate 2c surface) of the package.

Note that the substrates 2a through 2c that structure the package of the flow sensor 1 are flat substrates wherein there are no indented portions or raised portions formed for fitting together with the substrates that are above and below when stacking the substrates vertically, and should have a flat end surfaces to the degree wherein each of the substrates may be stacked together without modification. Additionally, when ceramic substrates are used, the flat end surfaces of the substrates in the present invention need not be absolutely flat end surfaces, but rather include also those wherein some degree of surface roughness occurs through sintering of green sheets.

Additionally, this flow sensor 1 may be mounted while maintaining the tight seal of the flow path through interposing seal rings 4, disposed at the inlet 3a and the outlet 3b of the flow path within the package, between the package surface (the substrate 2c surface) and the attachment surface on the side for the mounting.

Here the following effects (A) through (C) can be obtained through having the flat substrates that structure the package be the ceramic substrates 2a, 2b, and 2c:

### (A) Electrical Insulation

It is possible to maintain the electrical insulation within the package even if, for some reason, the electrical connection in the sensor surface (the detection surface) of the sensor chip were to become detached. For example, wire bonding is used in the electrical connection to the sensor surface in a thermal flow sensor, where the wire bonds are exposed to the flow path within the package. Consequently, if the package were made out of a metal, such as stainless steel, and a wire bond were to become detached for some reason, then it would not be possible to maintain the electrical insulation because a short would occur within the package. In contrast, in the flow sensor 1 according to the first form of embodiment, the package is structured by layering ceramic substrates, which are electrically insulated. Because of this, even if a wire bond on the sensor surface were to become detached, the electrical insulation could still be maintained, preventing the occurrence of secondary failures due to the short. Note that the same effect could still be obtained even if the flat substrates were structured from resin.

### (B) Coefficient of Thermal Expansion

The thermal compatibility with the sensor chip can be improved through the use of ceramic substrates as the flat substrates for structuring the package. For example, the sensor chip in a thermal flow sensor is structured from single crystal silicon. Because of this, if the package were a metal, such as stainless steel, the sensor chip would break, or there might be differences in the sensor characteristics, due to differences in coefficients of thermal expansion if a thermal load were applied. In contrast, in the flow sensor according to the first form of embodiment, a ceramic having a coefficient of thermal expansion near to that of the sensor chip is used in the flat substrates for the package, making it possible to suppress the occurrence of problems caused by differences in the coefficients of thermal expansion. Note that there is no limitation to being a ceramic substrate, but rather the same effect can be obtained even when structuring from a resin flat substrate, insofar as the coefficient of thermal expansion is near to that of ceramic.

### (C) Mass Production Efficiency

Structuring the package from ceramic substrates can achieve an improvement in the mass production efficiency. For example, if the package were made from a metal such as stainless steel, then it would be necessary to produce each component of the package through cutting, machining, etching, etc. of the metal. In contrast, in the present invention, manufacturing can be performed through stacking and sintering, as a batch, a plurality of ceramic green sheets, and then, after the sensor chips have been inserted, dividing into the individual packages. Because of this, it is possible to make a substantial improvement in mass production efficiency when compared to the case of fabricating packages out of a metal such as stainless steel. Furthermore, batch fabrication manufacturing is enabled, making an improvement in mass production efficiency possible, even in the case wherein resin substrates are used for the flat substrates that structure the package.

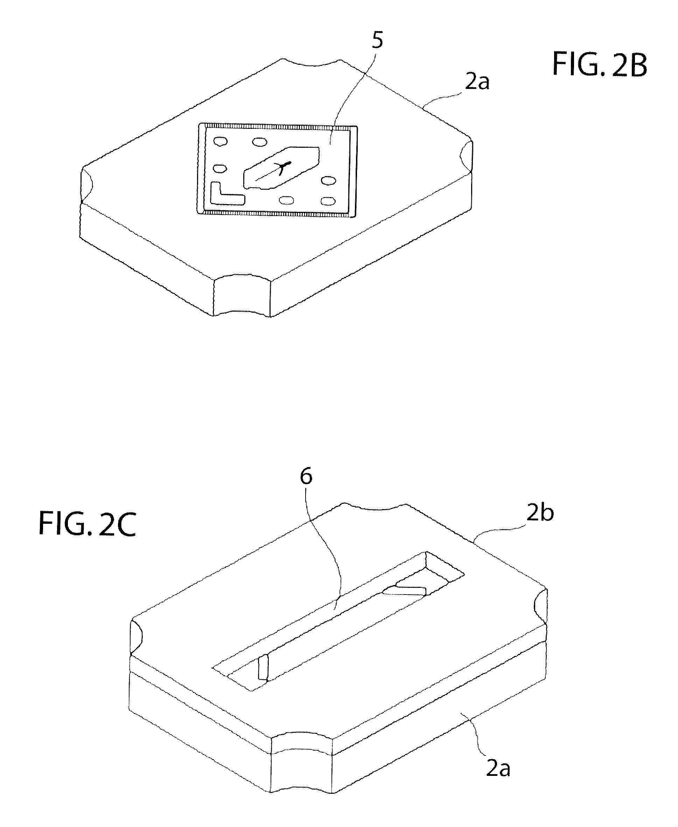

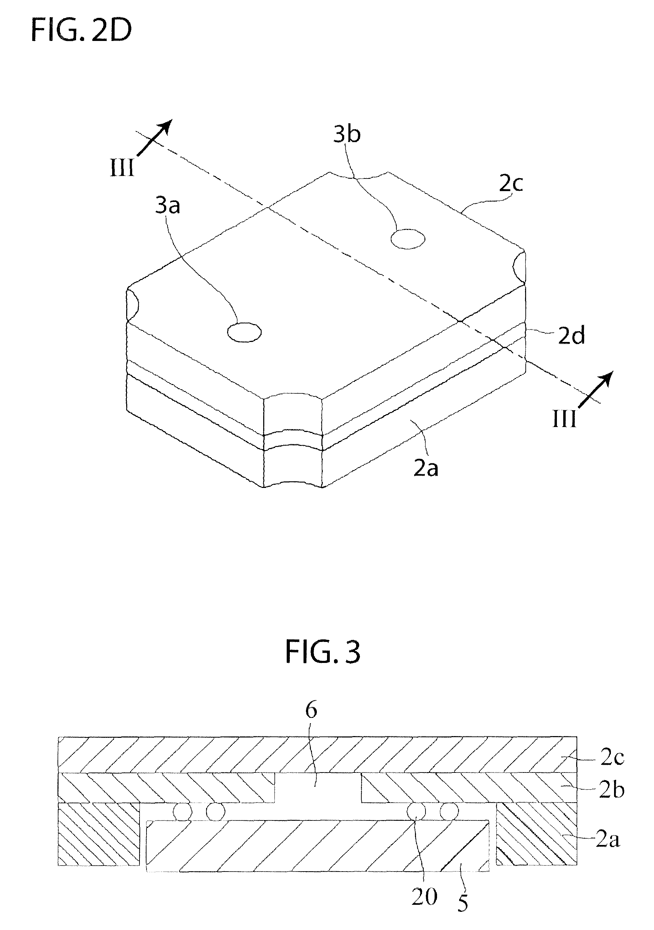

FIG. 2 is an oblique view illustrating the process of assembling the flow sensor in FIG. 1, described above, and FIG. 3 is a cross-sectional diagram along the section A-A in FIG. 2. As illustrated in FIG. 2 (a), a square hole 5a (for example, a diamond shape) opening corresponding to the shape of the sensor chip 5 is provided in the center portion of the substrate 2a that is the layer wherein the sensor chip is installed. The sensor chip 5 is inserted into this square hole 5a. (See FIG. 2 (b).) Additionally, a trench 6 is formed, as illustrated in FIG. 2 (c) in the substrate 2b that will be the flow path layer, where this trench 6 portion becomes the flow path within the package, and the sensor surface of the sensor chip 5 will be exposed to the gas that is to be measured.

As illustrated in FIG. 3, the electrodes on the sensor surface of the sensor chip 5 and the electrodes on the substrate 2b are connected electrically through an electrically conductive bonding material 20. Bumps, or the like, of a metal that is a material having a melting point that is higher than, for example, solder (a melting point of 1000° or more) can be used as the electrically conductive bonding material 20. In this case, the electrical connection between the sensor chip 5 and the substrate 2b can be achieved through applying heat and pressure, or applying pressure together with heat and an ultrasonic signal, to a gold bump. Note that a gold wire stud bump fabrication method or a plating method may be used to form the bumps.

When a metal with a melting point that is higher than that of solder or an electrically conductive adhesive is used as the electrically conductive bonding material 20, then when connecting the package to another substrate or when mounting electrical components onto the package end surface, one can anticipate the effect of suppressing any reduction in useful life of the connecting portions within the package that would be caused by the application of temperatures near to the melting point or glass transition point of the solder or electrically conductive adhesive within the package. Note that the electrically conductive bonding material 20 according to the present invention is not limited to the high melting point material set forth above, but rather solder, or the like, that has been used conventionally may also be used.

As illustrated in FIG. 2 (d) hole portions that serve as the inlet 3a and the outlet 3b for the flow path may each be formed corresponding to the positions of the end portions of the trench 6 in the substrate 2c that is placed on the substrate 2b. By structuring the package from the substrates 2a through 2c in this way, a flow path that is bent on the inside of the package will be formed. While in FIG. 2 an example is illustrated wherein the inlet and outlet openings for the flow path are provided in the substrate 2c surface, there is no limitation to only this package surface. In other words, the inlet and outlet openings may be provided in other surfaces of the package, for example, in the substrate 2a surface, instead, in a scope that does not deviate from the spirit or intent of the present invention.

### (1) EFFECTIVE USE OF THE PACKAGE END SURFACES

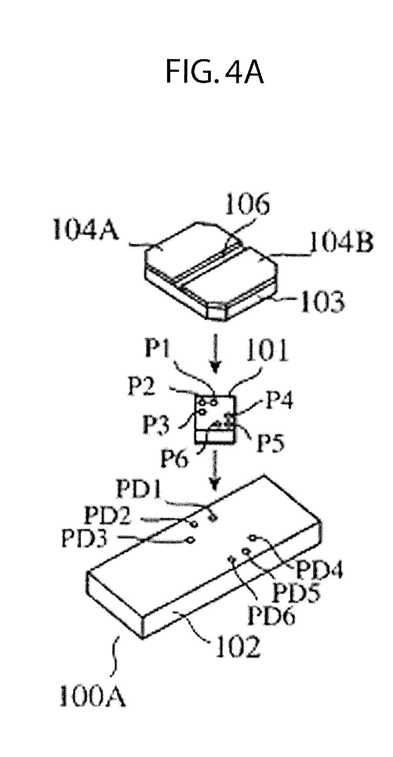

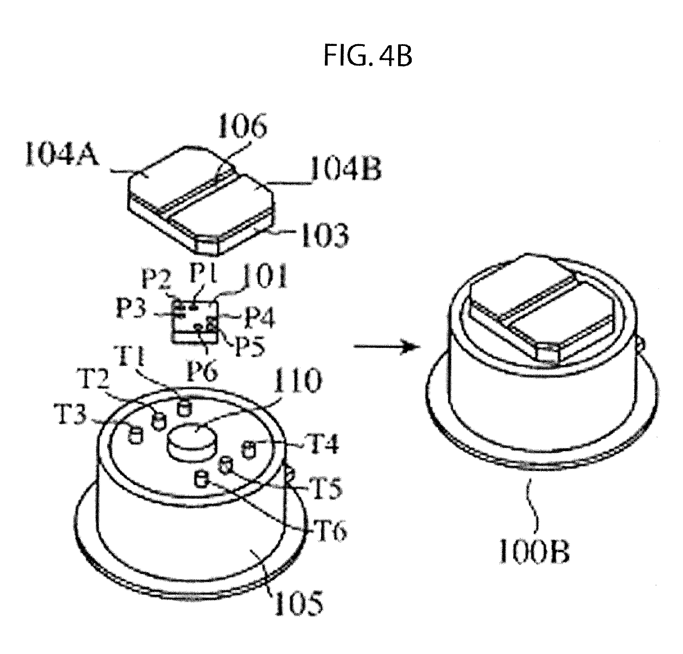

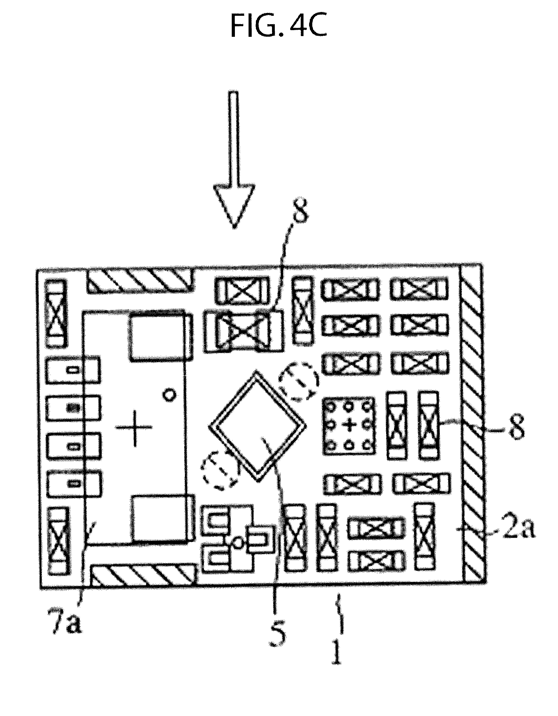

FIG. 4 is a diagram illustrating the structure of a flow sensor according to the first form of embodiment and a conventional sensor. FIG. 4 (a) and FIG. 4 (b) illustrate conventional sensors, and 4 (c) illustrates a sensor according to the first form of embodiment. In the flow sensor according to the first form of embodiment, as described above, both the inlet 3a and the outlet 3b of the flow path are provided on the same flat surface (substrate 2c surface) of the package, thus making it possible to use the other surfaces of the package effectively.

For example, as illustrated in FIG. 4 (a), in the conventional sensor 100A, the electrical circuits required for structuring the sensor were mounted on a base substrate 102 provided separately from the sensor chip 101, where the sensor chip 101 was housed within a base 103 provided on the base substrate 102, and two wiring substrates 104A and 104B were disposed facing each other with a gap therebetween. The electrodes P1 through P6 of the sensor chip 101 are connected by an electrically conductive bonding material to the wiring patterns, not shown, of the wiring substrates 104A and 104B. Additionally, the wiring patterns of the wiring substrates 104A and 104B are electrically connected to the electrode pads PD1 through PD6 of the base substrate through through holes, which are conductive paths that are exposed on the top and bottom surfaces of the base 103.

Additionally, in the conventional sensor 100B illustrated in FIG. 4 (b), a sensor chip 101 is mounted on a protruding portion 110 that is provided in a header portion 105. Additionally, the electrodes P-1 through P-6 of the sensor chip 101, in the same manner as in FIG. 4 (a), are connected by an electrically conductive bonding material to interconnection patterns, not shown, of the wiring substrate 104A and the wiring substrate 104B. The wiring patterns of these wiring substrates 104A and 104B are connected electrically to the electrode pins T1 - T6 of the header portion 105 through through holes that are exposed on the top and bottom surfaces of the base 103.

In this way, in the conventional sensor structure, there is the need for processes for connecting the base substrate 102 and the header portion 105, and the like, to the sensor chip 101, where the need to provide a special structure for exchanging electrical signals between the base substrate 102 and to the header portion 105 and the sensor chip 101 precludes miniaturization of the sensor.

On the other hand, with the flow sensor 1 according to the first form of embodiment, not only is it possible to mount through sealing the surface of the flow path inlet 3a and outlet 3b, but also it is possible to form the required electrical circuits on the sensor structure using the other package surfaces. For example, it is possible to mount all of the electrical components of the electrical circuits, which have conventionally been mounted on a substrate, or the like, that has been electrically connected through a lead from the base substrate or the header, such as connectors 7a for connecting electrical signals to the outside or other electrical elements 8, or the like, instead onto the package surface (substrate 2a surface) that is opposite from the surface that is provided with the inlet 3a and the outlet 3b for the flow path, as illustrated in FIG. 4 (c).

Concentrating the electrical circuits on one end surface of the package in this way enables a substantial miniaturization in the size of the sensor. Furthermore, because the base substrate and the header are unnecessary, it is possible to reduce the number of components, which is beneficial also in reducing cost.

Note that while in FIG. 4 (c) an example is illustrated wherein electrical circuits are mounted on the package surface (the substrate 2a surface) that is opposite from the surface wherein the inlet 3a and the outlet 3b of the flow path are provided, the mounting may be on a different package surface instead. For example, one may consider a structure such as mounting the connector 7a, used for connecting to the outside, to a package side surface (the vertical package surfaces on the substrates 2a and 2c surfaces), illustrated in FIG. 4 (c).

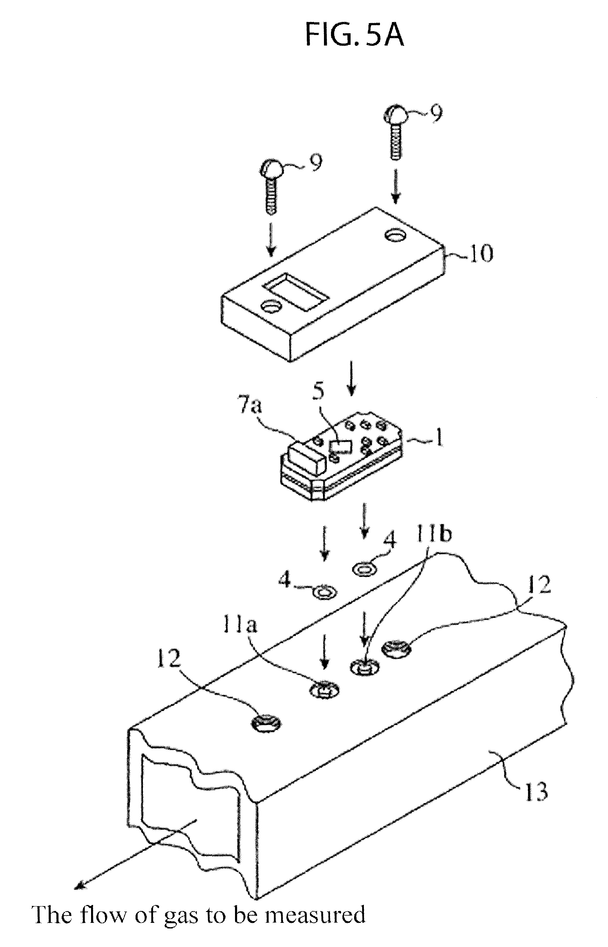

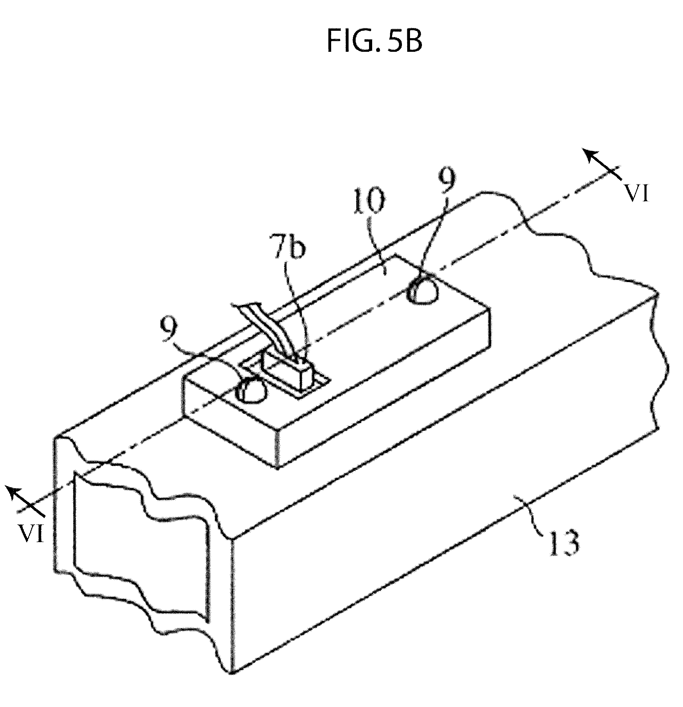

FIG. 5 is a diagram illustrating an example of mounting a flow sensor according to the first form of embodiment, showing the case of mounting in a pipe 13 in which flows the gas to be measured. In FIG. 5 (a), through holes 11a and 11b are provided in the sensor attaching portions of the pipe 13 in order for the fluid to flow to the flow sensor 1, and trench portions, into which seal rings 4 fit, are formed around the through holes 11a and 11b.

The flow sensor 1 is disposed aligning the through holes 11a and 11b with the inlet and outlet openings of the flow path in the package through the seal ring 4, a bracket 10 for fastening, which serves as the cover, is placed on top, and secured using fastening screws 9 by screwing into the screw holes 12 provided at the attaching portion of the pipe 13. Doing so causes the seal ring 4 to be crushed within the trench portion, to thereby maintain a tight seal of the flow path within the package and of the pipe 13. The flow sensor 1 is mounted on an attaching portion of the pipe 13, as illustrated in FIG. 5 (b), in this way.

As is clear from FIG. 5, in the flow sensor 1 in the first form of embodiment, the inlet and outlet of the flow path within the package are provided on the same end surface of the package, and thus mounting to the pipe 13 can be done through that end surface of the package alone. Consequently, it is not necessary to perform a seal process around the sensor or to seal the entire sensor, as it has been conventionally, making it fully possible to handle also situations wherein the installation space is narrow.

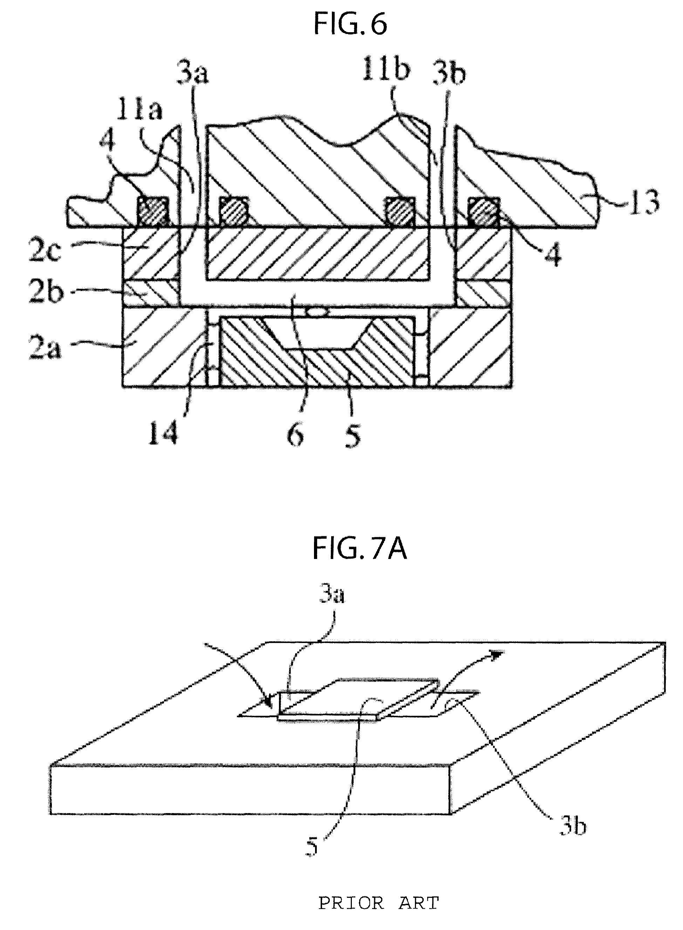

Additionally, as is illustrated in FIG. 6, which is a cross-sectional diagram along the section B-B in FIG. 5, in the flow sensor 1, which is attached as described above, the gap that is formed between the inner wall of the hole portion for housing the sensor chip, provided in the substrate 2a, and the side wall of the sensor chip 5 that is housed therein is sealed through the provision of a resin seal material 14, where the contacts between the inlet 3a and the outlet 3b of the flow path in the package and the through holes 11a and 11b of the pipe 13 is sealed by a seal ring 4. In this way, the flow sensor 1 is cut off from the outside air, and thus the gas to be measured that is flowing in the pipe 13 flows into the flow path of the package, through the through hole 11a and the flow path inlet 3a, and flows out to the pipe 13 through the flow path outlet 3b and the through hole 11b.

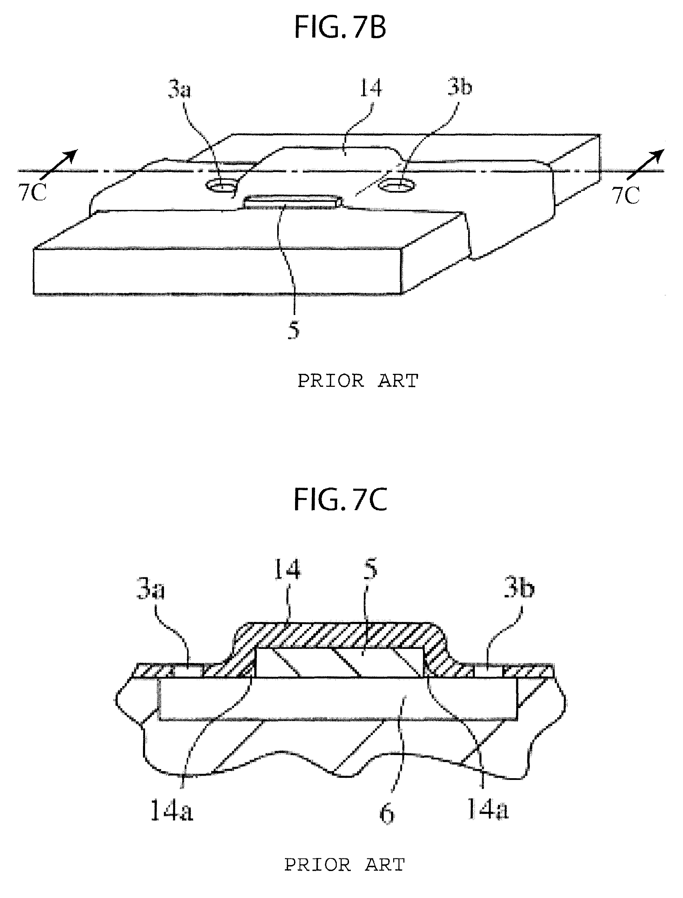

The sealed state of the flow sensor in the first form of embodiment will be explained next. First, for comparison, the sealed state will be explained using, as an example, the conventional flow sensor disclosed in Patent Reference 2. FIG. 7 is a diagram for explaining the sealed state of the conventional flow sensor disclosed in Patent Reference 2 , where FIG. 7 (a) is an oblique view illustrating the conventional flow sensor (shown in FIG. 4 of Patent Reference 2), FIG. 7 (b) is an oblique view illustrating the state wherein the flow sensor in FIG. 7 (a) has been sealed, and FIG. 7 (c) is an expanded view of the cross-section along the section B1-B1 in FIG. 7 (b). As is illustrated in FIG. 7 (a), in the conventional flow sensor, disclosed in Patent Reference 2, the sensor chip 5 is attached onto the substrate surface so as to span the trench 6 that forms the flow path, where the open portions that are formed on both sides of the sensor chip 5 form the respective inlet 3a and outlet 3b of the flow path. The gas to be measured flows in from the inlet 3a in the direction shown by the arrow in FIG. 7 (a), passes through the flow path within the package, and then flows out from the outlet 3b.

Additionally, in the conventional flow sensor disclosed in Patent Reference 2, the sensor chip 5 is disposed on the substrate surface wherein the trench 6 is formed, and the substrate surface wherein the trench 6 is formed is not coplanar with the sensor chip 5. Because of this, there is a protrusion from the substrate surface equal to the height of the sensor chip 5, using, as a reference, the surface of the substrate wherein the trench 6 is formed. When, in this way, the substrate surface wherein the trench 6 is formed is not coplanar with the sensor chip 5, then, as illustrated in FIG. 7 (c), a corner portion 14a is formed between the side surface of the sensor chip 5 and the aforementioned substrate surface.

As illustrated in FIG. 7 (b), in contrast to the conventional flow sensor, when a paste-type seal material 14 is provided to perform the sealing, the seal material 14 does not go fully across the corner portion 14a, described above, and thus there is the potential for the seal to break starting at the corner portion 14a, causing the fluid to leak. Additionally, when an elastic member is disposed as the seal material, a seal is possible with a step at the corner portion 14a, and when the seal is made by bending the seal material 14 at the corner portion 14a, then this may cause leaks of the fluid as there are changes over time. In this way, in the conventional flow sensor there is a structure wherein it is difficult to form a seal.

In contrast, in the flow sensor 1 in the first form of embodiment, the end surface wherein the inlet and outlet of the flow path of the package are formed at is a flat surface, and thus no position that can cause leaking is formed even when sealing the inlet and outlet of the flow paths within the package using seal rings 4. In this way, in the flow sensor 1 according to the first form of embodiment, not only can the seal be performed easily, but it is possible to stabilize the characteristics of sensor pressure and flow because it is possible to reduce the seal leakage.

Additionally, the flow sensor 1 according to the first form of embodiment may be structured as set forth below.

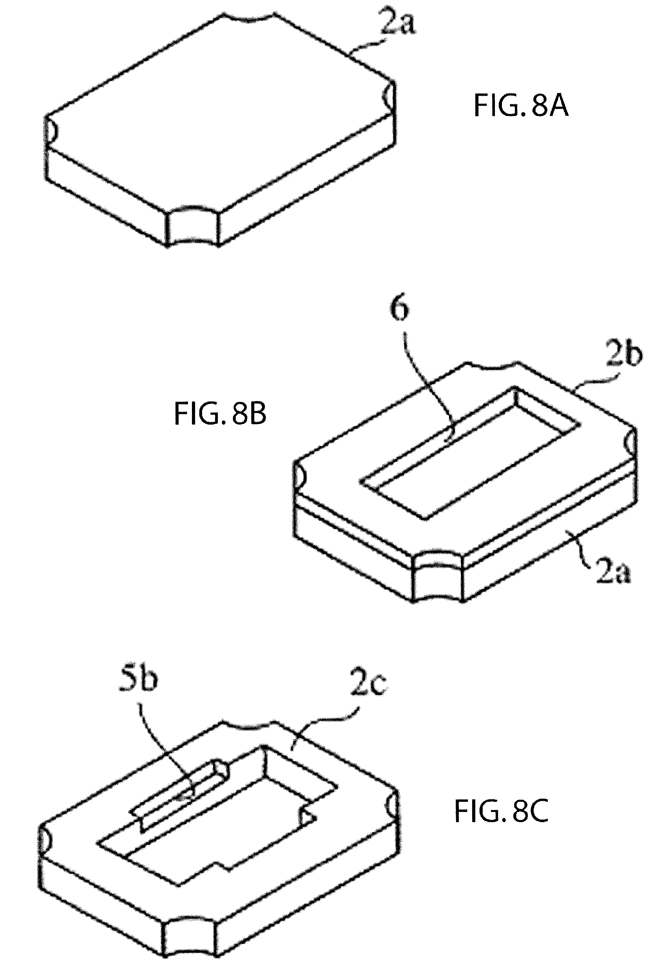

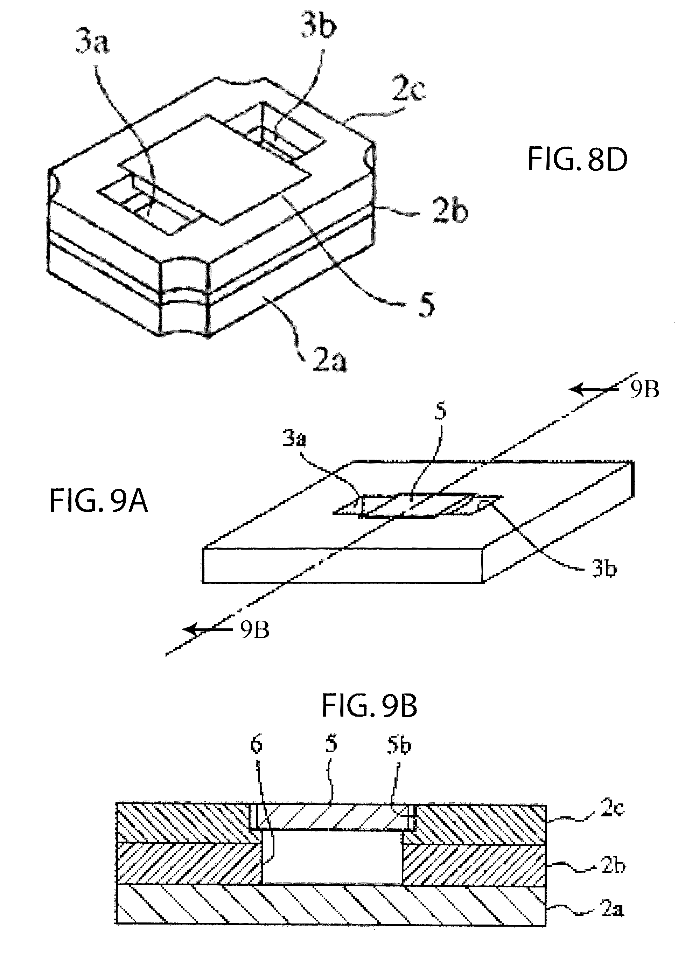

FIG. 8 is a diagram illustrating another structure of a flow sensor according to the first form of embodiment, showing an oblique view of the flow sensor and the various substrates that structure the package. While the flow sensor illustrated in FIG. 8 houses a sensor chip in a rectangular package that is structured through sintering together ceramic substrates 2a, 2b, and 2c, in the same manner as described above, the sensor chip 5 is fitted in from the end surface side wherein the inlet 3a and the outlet 3b of the flow path of the package are provided, and is structured so as to have a flat end surface (the substrate 2c surface).

The package of the flow sensor illustrated in FIG. 8 is formed through layering a substrate 2b, in which a trench 6, which will serve as the flow path within the package, is formed, onto a substrate 2a, which will serve as the base substrate, and then layering, thereon, a substrate 2c, in which a step portion 5b is formed for fitting in the sensor chip 5, in a trench with the same shape as the trench 6, and then bonding together. Fitting the sensor chip 5 into the step portion 5b in the substrate 2c causes the opening portions on both sides of the sensor chip 5 to become the inlet 3a and the outlet 3b of the flow path in the package. Note that the step portion 5b is formed to a depth so that the fitting of the sensor chip 5 therein will cause the substrate 2c surface and the back surface of the sensor chip 5 to be coplanar.

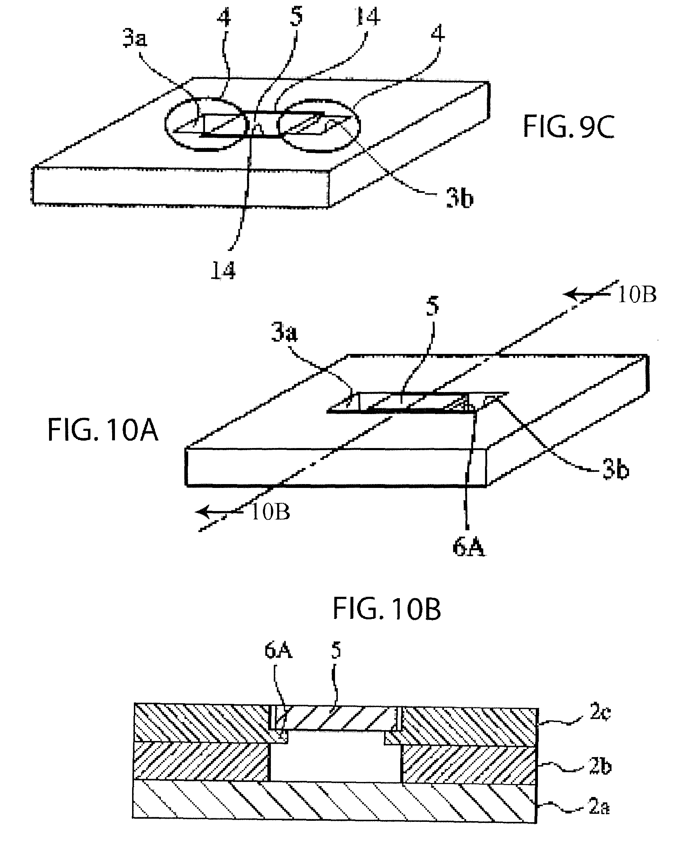

The same effects as in the structure illustrated in FIG. 1 can be achieved through this structure as well. FIG. 9 is a diagram for explaining the structure of the flow sensor in FIG. 8, where FIG. 9 (a) is an oblique view, FIG. 9 (b) is a cross-sectional diagram along the section B2-B2 in FIG. 9 (a), and FIG. 9 (c) illustrates the sealed state. As illustrated in FIG. 9 (a), in the flow sensor 1, the back surface of the sensor chip 5 is coplanar with the substrate surface wherein the inlet 3a and the outlet 3b of the flow path within the package are formed. Additionally, a step portion 5b is formed slightly larger than the sensor chip 5 in order to have flexibility in the positioning of the sensor chip 5.

Additionally, in this package the gap between the side surface of the sensor chip 5 and the step portion 5b is filled by a seal material 14 that has thixotrapy, as illustrated in FIG. 9 (c), to thereby perform both the sealing and the positioning and securing of the flow path within the package. Doing this causes the seal material 14 to be held between the side wall of the sensor chip 5 and the step portion 5b, making it possible to prevent flow into the flow path within the package. This makes it possible to stabilize the sensor characteristics because it is possible to obtain uniform cross sections for the flow paths. Note that it is possible to perform planarization through grinding even if the seal material 14 overflows to the sides of the substrate.

Furthermore, even in this structure, the inlet 3a and the outlet 3b of the flow path within the package are formed on the same flat end surface, in the same manner as with the structure illustrated in FIG. 1, and thus not only is it possible to form a reliable seal that will not cause leaks, but also possible to seal the inlet 3a and the outlet 3b individually using seal rings 4, as illustrated in FIG. 9 (c).

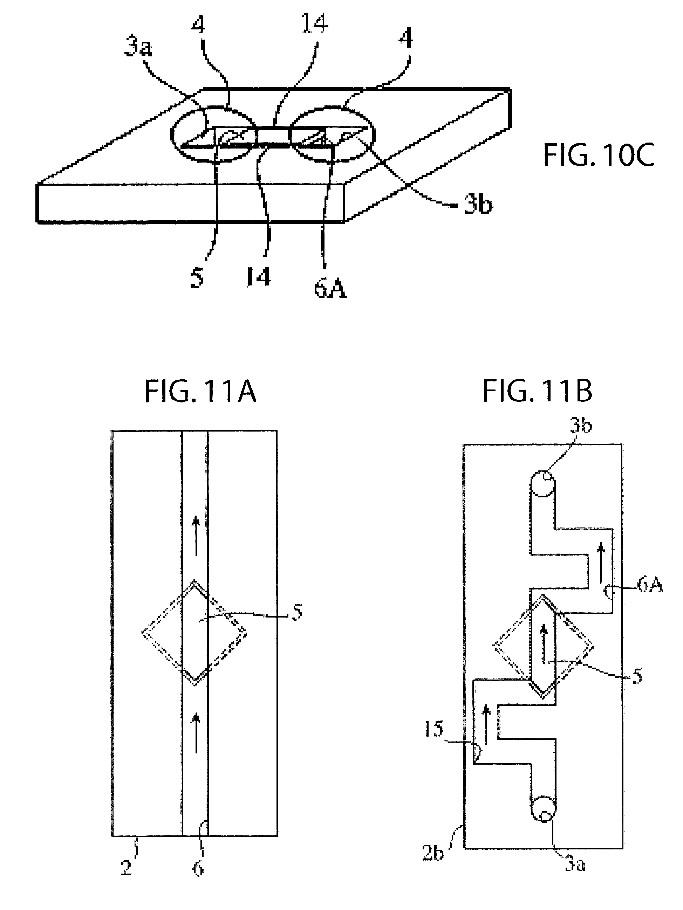

Additionally, when a sensor chip having about the same width as the flow path is used as the sensor chip 5, the package may be structured as set forth below. FIG. 10 is a diagram illustrating another structure of a flow sensor according to the first form of embodiment, where FIG. 10 (a) is an oblique view, FIG. 10 (b) is a cross-sectional diagram along the section B3-B3 in FIG. 10 (a), and FIG. 10 (c) illustrates the sealed state. In this flow sensor, as illustrated in FIG. 10 (b), a positioning portion 6A is provided so as to extend out into the flow path side, and the sensor chip 5 that is fitted into the trench that is provided in the substrate 2c is disposed on the positioning portion 6A. Doing so structures the package so that the back surface of the sensor chip 5 will be coplanar with the substrate surface wherein the inlet 3a and the outlet 3b of the flow path within the package are formed.

Additionally, the flow path within the package is both sealed and positioned/secured through filling in the seal material 14, having thixotrapy, between the side wall of the sensor chip 5 and the inner wall of the trench wherein the flow path side is blocked by the positioning portion 6A, as illustrated in FIG. 10 (c), in this package as well. Doing so makes it possible to prevent the seal material 14 from crossing the gap between the side wall of the sensor chip 5 and the inner wall of the trench to flow into the flow path within the package. This makes it possible to stabilize the characteristics of the sensor by obtaining a uniform flow path cross-section.

Furthermore, because the inlet 3a and the outlet 3b of the flow path within the package are formed on the same flat end surface in this structure as well, not only is it possible to form a reliable seal that will not cause leaks, but also the inlet 3a and the outlet 3b can each be sealed individually using seal rings 4, as illustrated in FIG. 10 (c).

### (2) IMPROVED FLOW PATH WITHIN THE PACKAGE

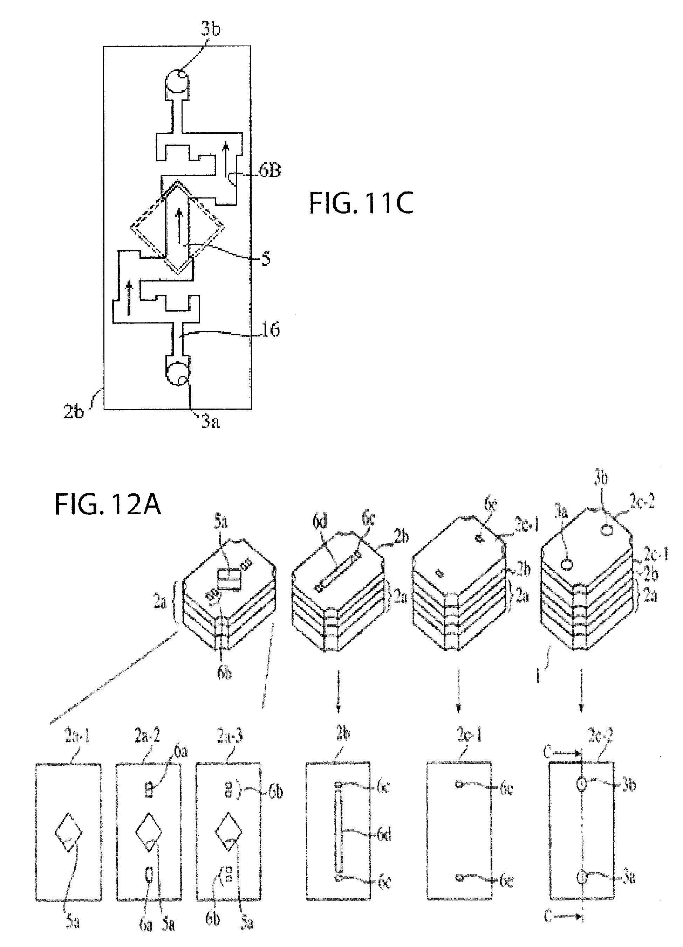

FIG. 11 is a top view of an example of a structure of a flow path within the package for the flow sensor as set forth in the first form of embodiment, showing the structure of the top portion as transparent to allow the flow path to be seen. In a conventional flow sensor, typically the flow path is linear, as illustrated in FIG. 11 (a) in order to apply the average flow speed to the gas to be measured. If, in this structure, there is dust included in the gas to be measured, the dust will arrive at the sensor surface (the fluid detecting portion) of the sensor chip 5 without any obstruction whatsoever, which can cause a bias in the temperature distribution required for the measurement, and which can cause electrolytic corrosion.

Given this, in the flow sensor 1 in the first form of embodiment, a bent flow path is formed in parallel with the substrate 2b surface, as the flow path 6A within the package, having the inlet 3a and the outlet 3b on the same end surface of the package, as illustrated in, for example, FIG. 11 (b). This structure provides the function of performing aerosol removal through inertial removal of dust in the flow path 6A within the package.

Given this structure, when a gas to be measured flows around the angle portion 15A in the flow path 6A in the package, the portion of that dust that is included in the gas that does not make the turn at the angle portion 15 collides with the inner wall of the flow path 6A to accumulate in the vicinity of the angle portion 15. Note that by having the angle of the angle portion 15 be a right angle or an acute angle that is less than that, in the flow path 6A of the package, makes it possible to increase the effects of the inertial dust removal.

Additionally, instead of simply a bend for the flow path that is parallel to the substrate 2b surface, instead, as illustrated in FIG. 11 (c), the flow path 6B within the package may be structured through the provision of a T-shaped path that has a short dead-end path on one side of a branch within the flow path, or structured with a constricted portion 16 wherein the width of the flow path narrows until entering into the T-shaped portion, or structured with the bend angled in stages.

When structured as in FIG. 11 (c), the dust that is included in the gas to be measured, which is flowing within the flow path 6B within the package, cannot pass through the constricted portion 16, and accumulates at the inlet portion thereof, and even if it passes through the constricted portion 16, the dust will be collected through adhering to the inner wall of the T-shaped dead-end path. Here particles having an aerodynamic particle diameter larger than particles of a given diameter in an aerosol in the gas to be measured collide with the dust collecting impactor, which is the portion to which the dust particles adhere within the flow path, and these dust particles remain adhered to the impactor insofar as they are not scattered again or do not fall off due to gravity.

Note that in a conventional flow sensor there are cases wherein a mesh or a filter is provided upstream of the inlet of the flow path within the package to remove the dust; however, in the flow sensor 1 according to the first form of embodiment, it is possible to maintain the dust removing effect, through having the flow path within the package be structured as described above, without the provision of a mesh or a filter.

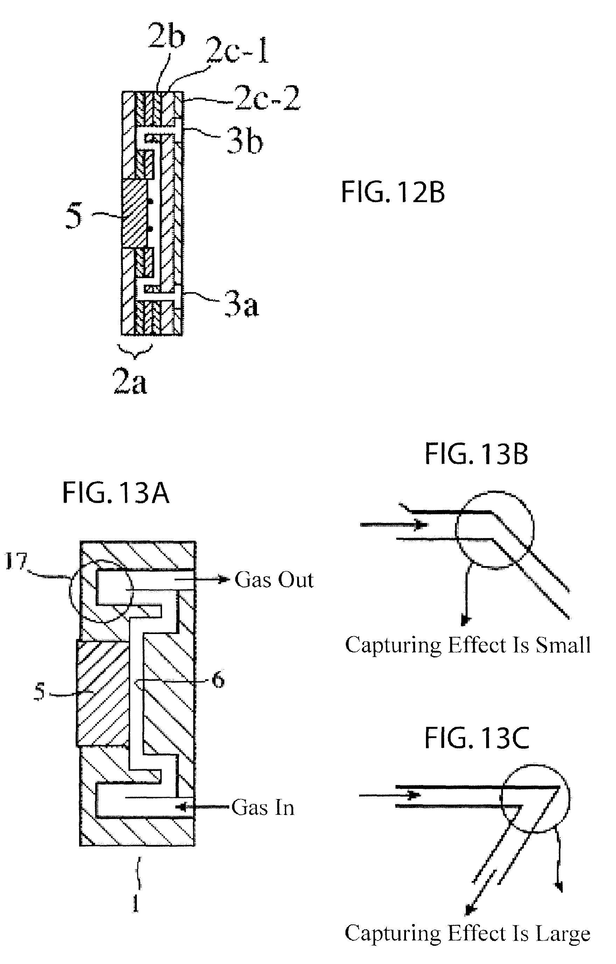

FIG. 12 is a diagram illustrating an example of another structure of a flow path within the package for the flow sensor according to the first form of embodiment, wherein the flow path is structured so as to bend to be perpendicular from the substrate surface (that is, to the vertical direction). FIG. 12 (a) illustrates the process for assembling a flow sensor having a flow path of this structure, and FIG. 12 (b) shows a cross-sectional diagram of a flow sensor, along the section C-C in FIG. 12 (a). Note that in the oblique view at the top of FIG. 12 (a), the thickness of the substrate is shown emphasized to make it easier to see the layered structure of the substrate.

As is illustrated in FIG. 12 (a), a square hole into which the sensor chip 5 fits is formed in the substrate 2a-1. Additionally, in addition to the square hole 5a, a hole portion 6a, which serves as the dust collecting impactor in the flow path, is formed in the substrate 2a-2. Furthermore, in addition to the square hole 5a, hole portions 6b is are formed in the substrate 2a-3 to structure a flow path for guiding the gas to be measured towards the dust collecting impactor and a flow path for guiding the gas to be measured in the downward direction from the dust collecting impactor. Note that the provision of the hole portions 6b that are symmetrical in respect to the square hole 5a in the substrate 2a-3 illustrates an example of a structure that has a dust collecting function in respect to the downstream gas as well. The substrate 2a that serves as the layer in which the sensor is installed is structured through layering these three substrates 2a-1 through 2a-3.

A trench 6d for carrying the gas to be measured to the sensor surface of the sensor chip 5 and hole portions 6c that serve as the flow paths for carrying the gas to be measured to and from the dust collecting impactor are formed in the substrate 2b, which serves as the flow path layer. This substrate 2 is layered onto the substrate 2a, as illustrated in FIG. 12 (a). Additionally, hole portions 6e, which are continuous with the hole portions 6c of the substrate 2b, are formed in the substrate 2c-1, and the inlet 3a and the outlet 3b of the flow path in the package, which are continuous with the hole portions 6e and 6e of the substrate 2c-1, are formed in the substrate 2c-2.

These substrates 2c-1 and 2c-2 being layered sequentially on the substrate 2b and then each of these substrates being bonded together through, for example, sintering structures a package that has a flow path that is bent perpendicularly to the substrate surface (in the vertical direction), as illustrated in FIG. 12 (b). Note that while in the example in FIG. 12 a case is shown wherein the substrate 2c-2 is structured on top of the substrate 2c-1 wherein the hole portions 6b are formed, instead the inlet 3a and the outlet 3b of the flow path may be formed in the substrate 2c-1, to reduce the number of substrates that are layered on top of the flow path layer.

FIG. 13 is a diagram for explaining the dust removing effect of the flow sensor having the flow path structure illustrated in FIG. 12. While not illustrated explicitly in FIG. 13, the gap between the inner wall of the hole portion for housing the sensor chip, provided in the package substrate, and the side wall of the sensor chip 5, housed therein, is sealed with a resin seal material in this flow sensor as well. As is illustrated in FIG. 13 (a), the bent-back portion 17 of the flow path, which is bent upward perpendicularly from the substrate surface, functions as a dust collecting impactor in the same manner as the case wherein the flow path is parallel to the substrate surface, as set forth above. Additionally, in this structure as well, the angle of the bend in the flow path being an obtuse angle reduces the dust capturing effect. (See FIG. 13 (b).) On the other hand, having the angle of the bend of the flow path be an acute angle, as illustrated in FIG. 13 (c), increases the dust capturing effect.

In a structure as set forth above wherein the flow path within the package is bent perpendicularly from the substrate surface, the punching shape for forming the flow path within the package is no more complicated than in the structure wherein the flow path is bent in a direction that is parallel to the substrate surface, as set forth above, and thus it is easy to produce accurate dimensions, and the manufacturing is easy. Additionally, when compared to the case wherein the bend is in a direction that is parallel to the substrate surface, the dimension of the package in the horizontal direction can be made smaller.

Note that while the case wherein the bend is in a direction that is parallel to the substrate surface and the case wherein the bend is in a direction that is perpendicular to the substrate surface were explained as separate structures for the flow path within the package, instead there can be a bend in a direction that is parallel to the substrate surface and a bend in the direction that is perpendicular to the substrate surface. Furthermore, the structure that serves as the dust collecting impactor may also be provided in the direction that is perpendicular to the substrate surface.

### (3) IMPROVED PACKAGE MOUNTING STRUCTURE

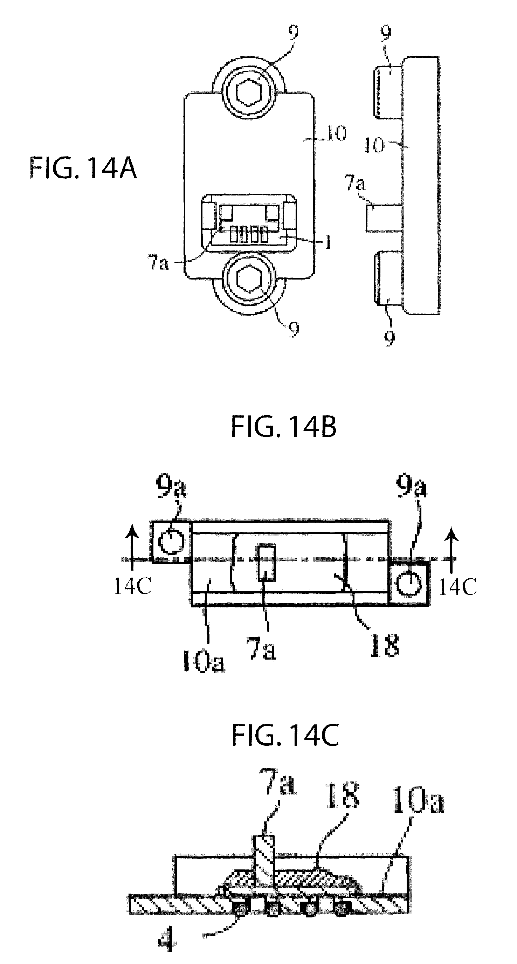

FIG. 14 is a diagram illustrating an example of a mounting structure for a flow sensor as set forth in the first form of embodiment. In the mounting structure illustrated in FIG. 14 (a), an inlet and an outlet for the flow path within the package of the flow sensor 1, and a hole for removing the gas to be measured on the side wherein mounting is performed (where there is a differential pressure between both ends that are connected to the flow path inlet and outlet) are provided through seal rings 4, where a fastening bracket 10 is placed on top, and a fastening screw 9 is secured through screwing into a screw hole on the mounting side.

Moreover, in the mounting structure illustrated in FIG. 14 (b), a fastening bracket 10a is used with a simple structure wherein hole portions that connect to the inlet and the outlet of the flow path within the package, and a through hole 9a for a fastening screw, are provided in a member wherein a flat plate is bent so as to have a cross-sectional shape that is a U shape. The flow sensor 1 is attached to the top of the fastening bracket 10a with a fill material 18 so as to form a single monolithic structural unit. In mounting this unit, the hole portions of the fastening bracket 10a that are continuous with the inlet and outlet of the flow path within the package, and the hole portions for removing and returning the gas to be measured, on the side to be mounted, are disposed with the seal rings 4 therebetween, and the fastening screw is screwed into the screw hole on the mounting side through the through hole 9a.

As a result, the seal ring 4 that is illustrated in the cross-sectional diagram along the section D-D in FIG. 14 (b) is compressed between the bottom surface of the fastening bracket 10a and the attachment surface of the side that is mounted, to preserve the tightly sealed state of the flow path within the package. Note that the fastening bracket 10a that is illustrated in FIG. 14 (b) can be fabricated inexpensively by a press process, to enable the provision of a sensor that is superior in terms of simplicity and in terms of cost, when compared to the mounting structure illustrated in FIG. 14 (a).

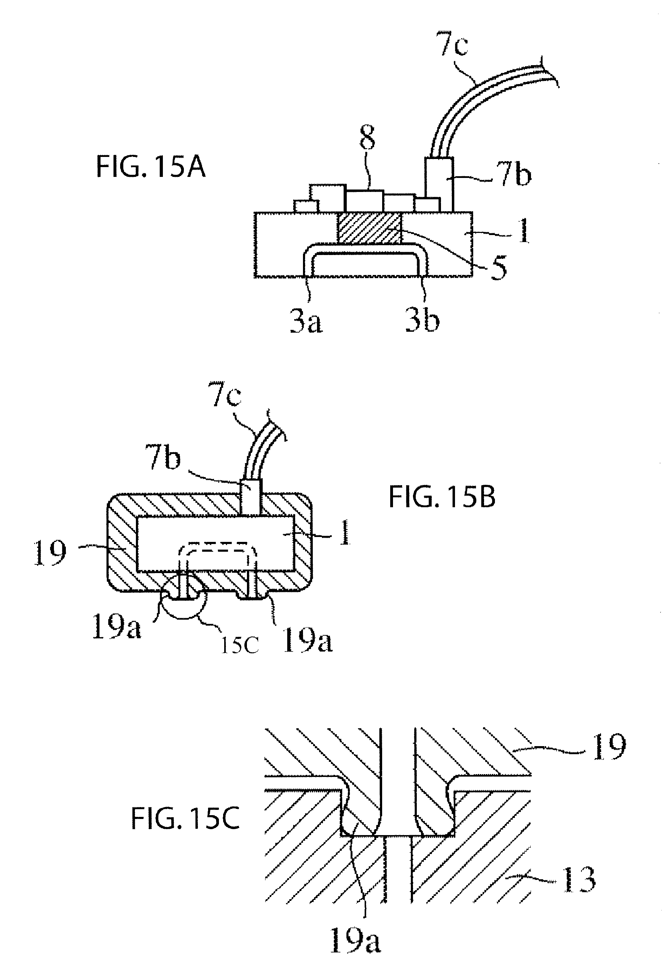

FIG. 15 is a diagram illustrating an example of a structure of another flow sensor as set forth in the first form of embodiment, where FIG. 15 (a) is a cross-sectional diagram of the flow sensor 1, FIG. 15 (b) shows a cross-sectional diagram of a structure wherein the outside of the package is covered with resin, and FIG. 15 (c) is an expanded view of the D portion in FIG. 15 (b) at the time of mounting. In the structure illustrated in FIG. 15, the package of the flow sensor 1 illustrated in FIG. 15 (a) is covered by resin 19, except for the portion wherein a connector 7b that is connected to an external lead cable 7c is attached, and the portions for the inlet 3a and the outlet 3b for the flow path within the package. Note that although it is not shown particularly in FIG. 15 (a), the gap produced between the inner wall of the hole portion for housing the sensor chip, provided in the package substrate, and the side wall of the sensor chip 5 that is housed therein is filled with a resin seal material in this flow sensor as well.

The covering by the resin 19 in this way can be through monolithic molding wherein melted resin 19 is caused to flow around the package in the mold, and then to harden. Note that in the conventional plastic molding that uses nylon, ABS, or the like, there is the potential for electronic components to undergo pressure damage with the injection pressures between several hundred ⁅kgf⁆ to 1 ton per square centimeter. On the other hand, when thermoplastic hot melt adhesive is used, the molding can be performed at a relatively low injection pressure of between several and 50 kgf per square centimeter. Here monolithic molding is performed using the thermoplastic hot melt adhesive as the resin 19. Note that a material other than a hot melt adhesive may be used, insofar as it is a material that enables low pressure molding so as to not damage the sensor package.

Furthermore, a bushing-shape raised portion 19a is formed from the resin 19, as illustrated in FIG. 15 (b) at the peripheral portions of the inlet 3a and the outlet 3b of the flow path within the package. Because the resin 19 is a resin with low hardness, the raised portion 19a functions the same way as a seal ring at the time of mounting, to be compressed by the trench portion of the attachment portion, as illustrated in FIG. 15 (c) to tightly seal the flow path from outside air. In this way, it is possible to perform the mounting even without using a seal ring, through the structure illustrated in FIG. 15, which is effective when attaching a sensor to a location wherein no seal ring can be provided in a stable manner (such as when installing on a vertical surface).

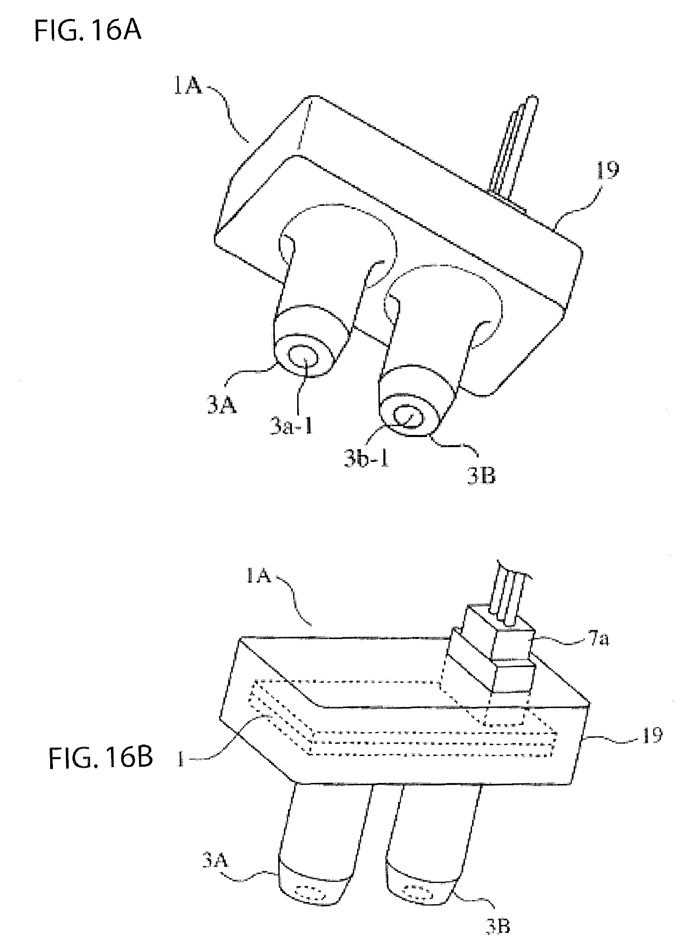

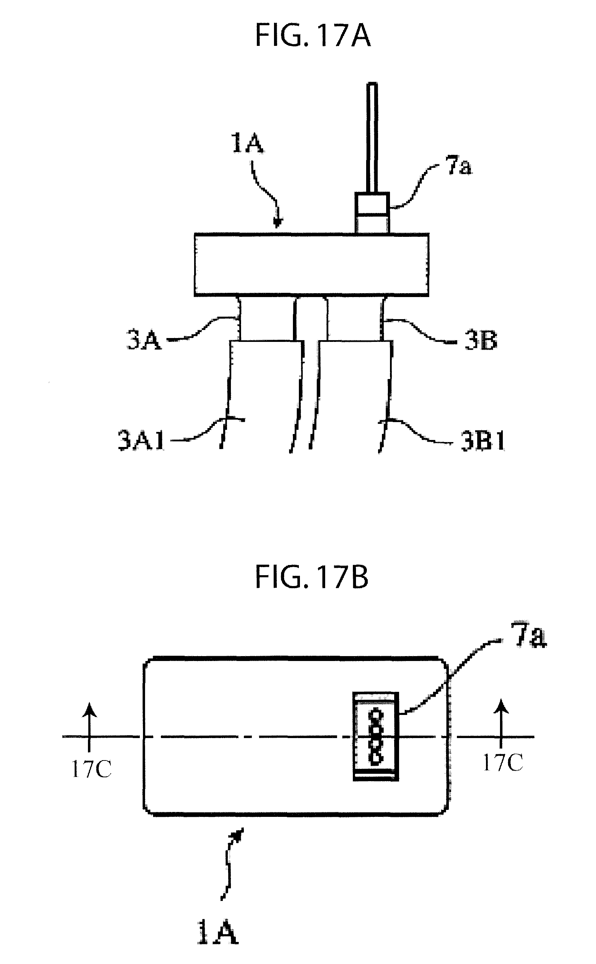

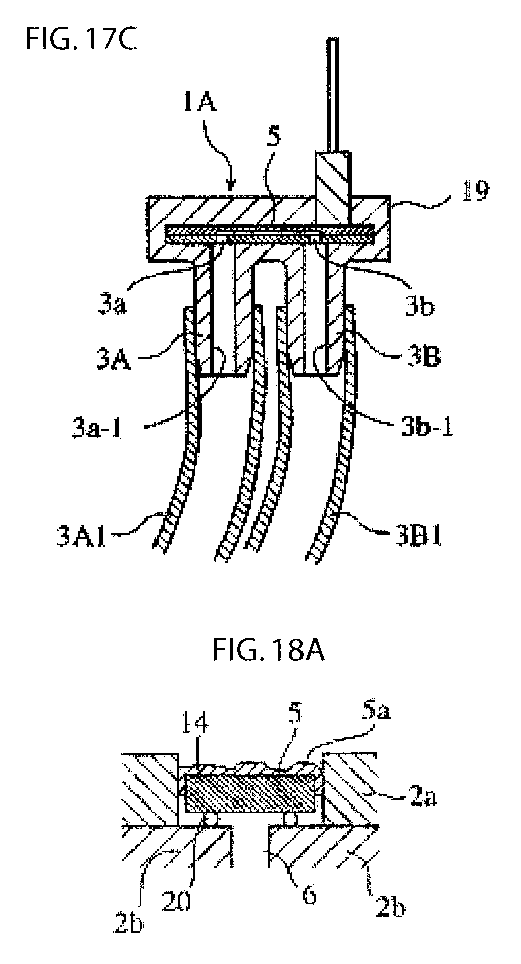

FIG. 16 is a diagram illustrating an example of another structure of a flow sensor according to the first form of embodiment, where FIG. 16 (a) shows an oblique view from below the sensor, and FIG. 16 (b) shows an oblique view from above the sensor. Note that in FIG. 16 (b) the structures within the resin 19 are shown by a dotted line to enable the interior of the flow sensor 1A to be seen. FIG. 17 is a diagram for explaining the state of use of the flow sensor in FIG. 16, where FIG. 17 (a) is a side view, FIG. 17 (b) is a top view, and FIG. 17 (c) is a cross-sectional diagram along the section D1-D1 in FIG. 17 (b). Note that although it is not shown particularly in FIG. 15 (c), the gap produced between the inner wall of the hole portion for housing the sensor chip, provided in the package substrate, and the side wall of the sensor chip 5 that is housed therein is filled with a resin seal material in this flow sensor 1A as well.

As illustrated in FIG. 16 (b), in the flow sensor 1A, the package of the flow sensor 1A is covered by the resin 19 such that a connector 7a for the external lead is exposed, where tube-shaped tube insertion portions 3A and 3B that protrude downward are formed from the resin 19, as illustrated in FIG. 16 (a). Additionally, as is illustrated in FIG. 16 (a) and FIG. 17 (c), an inflow hole 3a-1 that is continuous with the inlet 3a of the flow path within the package, and an outflow opening 3b-1 that is continuous with the outlet 3b are formed in the tube insertion portions 3A and 3B, respectively. These external structures made out of the resin 19 can be fabricated through monolithic molding wherein melted resin 19 is caused to flow around the package to be molded together, and then hardened, in the same manner as with FIG. 15.

As illustrated in FIG. 17 (a), a tube 3A1 for introducing the gas to be measured is inserted into the tube insertion portions 3A, and a tube 3B1, out of which the gas to be measured is to flow, is inserted into the tube insertion portion 3B. The gas to be measured, which is introduced through the tube 3A1 passes through the inflow hole 3a-1 of the tube insertion portion 3A and through the inlet 3a that is continuous therewith, to flow into the flow path within the package, and then passes through the outlet 3b of the flow path within the package and through the outflow opening 3b-1 that is continuous therewith, to flow out to the tube 3B1. When this is done, the flow of the gas within the flow path to the package is detected by the sensor chip 5.

In this way, the flow sensor 1A can be attached for an installation wherein the gas to be measured can be introduced and returned through the tubes 3A1 and 3B1, and there is no need for tightening using fastening screws. Additionally, even in a case wherein there is no space for installing the flow sensor 1A in a pipe, or the like, for the gas to be measured, it is still possible to route the tubes 3A1 and 3B1 to be attached in a location wherein there is adequate space. In this way, the flow sensor 1A enables the handling of measurement operations in more complex places, with a greater degree of freedom in the installation.

### (4) EXAMPLE OF APPLICATION TO A FLOW METER

The flow sensor 1 of the first form of embodiment can be mounted suitably in, for example, the flow meter disclosed in Reference Document 1. In the flow meter disclosed in Reference Document 1, even though conventionally a flow sensor has been used such as illustrated in Patent Reference 3, the sensor has been attached using an adhesive to the circuit board within the flow meter, without being able to use automated equipment, such as a mounter, when performing the mounting. Additionally, in the conventional sensor as illustrated in Patent Reference 3, the sensor chip has been mounted onto the substrate using die bonding or wire bonding, and larger sensor sizes have been the cause for increased sizes in the flow meters.
(Reference Document 1) International Publication Number WO 2005/121718 (See FIG. 1)

Given this, by mounting the flow sensor 1 according to the first form of embodiment, instead of the conventional flow sensor, in a flow meter, it is possible to simplify the structure of the flow meter and possible to achieve a miniaturization of the flow meter. In other words, the flow sensor 1 is structured as a package chip, bonded to the substrate as set forth above, enabling mounting using automated equipment, such as a chip mounter, in the same manner as for other electrical components that are mounted onto circuit boards in the flow meter. Furthermore, the flow sensor 11 can be attached even in a narrow installation space, wherein wire bonding cannot be used for the electrical contacts. Doing so makes it possible to reduce the space that is required for the installation of the flow sensor 1, enabling miniaturization of the flow meter itself.

### (5) IMPROVED SENSOR INSTALLATION STRUCTURE 1

In the flow sensor 1, after the package is structured by layering the substrates 2a through 2c, as, for example, illustrated in FIG. 2, and bonding together, then an electrically conductive bonding material is used to mount the sensor chip 5 face-down in the square hole 5a while electrically connecting the electrodes of the substrate 2b to the electrodes on the sensor surface of the sensor chip 5, after which a coating of a resin sealing material is applied.

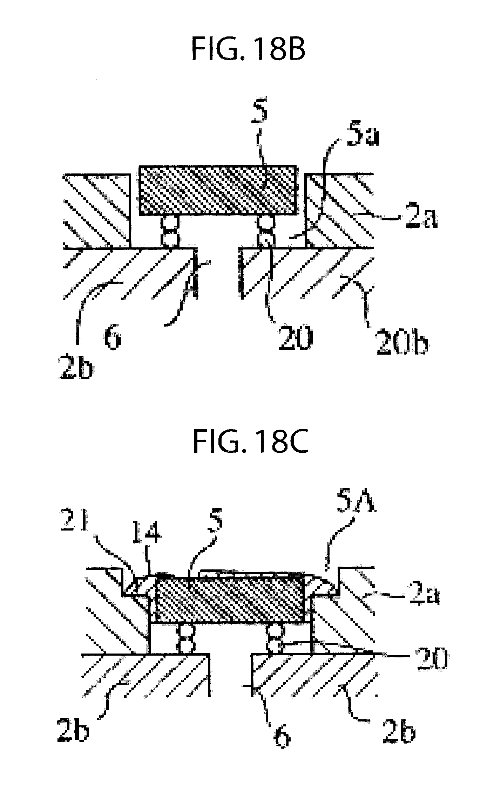

FIG. 18 is a diagram for explaining an example of mounting a sensor to the package, where FIG. 18 (a) and FIG. 18 (b) illustrate square holes for mounting conventional sensor chips, and FIG. 18 (c) illustrates the case wherein a square hole for mounting a sensor chip is structured as a hole having a step. As illustrated in FIG. 18 (a), when the square hole 5a is deeper than the thickness of the sensor chip 5, or when the height-direction dimension of the electrically conductive bonding material is inadequate, so that the sensor chip 5 goes all the way into the square hole 5a, then it would become difficult to grasp the sensor chip 5, making it difficult to rework the mounting position of the sensor chip 5 after inserting and fitting into the square hole 5a.

Additionally, when, as illustrated in FIG. 18 (b), the square hole 5a is shallower than the sensor chip 5 or the height-direction dimension of the electrically conductive bonding material is increased, or the like, so that the sensor chip 5 that is fitted into the square hole 5a protrudes from the surface of the substrate 2a, then it becomes possible to grasp the sensor chip 5 from above, so that reworking the mounting position will be easy. However, because the sensor chip 5 protrudes from the surface of the substrate 2a, there is the possibility that there may be a direct mechanical impact on the sensor chip 5, or that the resin sealing material may spread to other component mounting portions on the substrate 2a surface. In this way, there are problems inherent in each situation, whether or not the sensor chip 5 protrudes from the square hole 5a.

Given this, in the first form of embodiment, a hole portion having a step 21, as illustrated in FIG. 18 (c) is used as the square hole 5A for mounting the sensor chip. When the sensor chip 5 is mounted face-down in the square hole 5A, the sensor chip 5 will protrude from the step 21, but will not protrude from the substrate 2a surface. Structuring in this way makes it possible to rework the mounting position of the sensor chip 5 by grasping the portion of the sensor chip 5 that protrudes from the step 21. Additionally, even when the volume of the resin seal material 14 required for sealing the sensor chip 5 inside of the package is applied, the spreading thereof onto the step 21 of the square hole 5A does not spread to the electrical components on the substrate 2a surface.

Additionally, when a material having thixotropy is used as the resin seal material 14, then when the sensor chip 5 is fitted into the square hole 5A (which, in this case, may be a normal square hole without a step), the seal material 14 fills into the gap between the side wall of the sensor chip 5 and the inner wall of the square hole 5A. Doing so makes it possible both to seal the sensor chip 5 and to cause the cross-sectional area of the flow path to be uniform. In this case, the injection conditions, such as the dispenser injection pressure and injection time, and the like, for performing an appropriate injection, wherein the amount of fill of the seal material 14 does not drip into the flow path, are determined in advance, and injection volume control is performed based thereon.

Note that a case of applying a sensor installation structure illustrated in FIG. 18(c) to the flow sensor 1 was explained above, but insofar as the sensor is one wherein a sensor chip is mounted in a package opening, the sensor may be of a structure aside from that of the flow sensor 1.

### (6) IMPROVED SENSOR INSTALLATION STRUCTURE 2

There are cases where in variability occurs in the dimensions in the height direction of the sensor chip 5 due to variability in the compression tolerance (melt tolerance) of the electrically conductive bonding material or variability in the force with which the sensor chip 5 is pressed against the substrate 2b when electrically connecting the electrodes of the substrate 2b to the electrodes of the sensor chip 5 that is mounted face-down in the square hole 5a. When there is this type of variability in the height direction of the sensor chip 5, then there will be variability in the sensor characteristics due to non-uniformity in the flow path and in the cross-sectional area of the flow path that is regulated by the sensor surface that is exposed thereto.

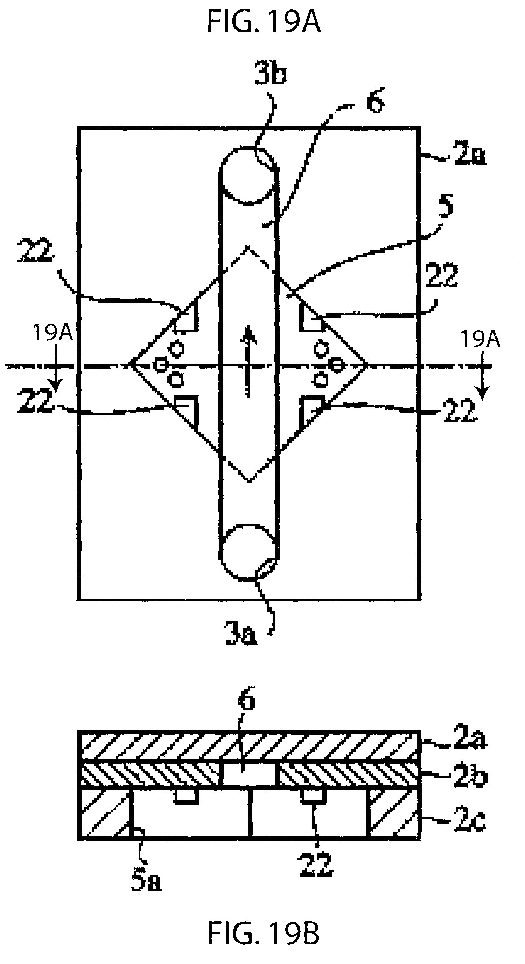

Given this, in the flow sensor 1 according to the first form of embodiment, a spacer portion for maintaining the sensor chip 5 at a uniform position in the height direction (a uniform position in the depth direction of the square hole 5a) is provided on the substrate 2b. FIG. 19 is a diagram illustrating one the structure for a spacer portion for a flow sensor according to the first form of embodiment, where FIG. 19 (a) shows a top view and FIG. 19 (b) shows a cross-sectional diagram along the section E-E in FIG. 19 (a). Note that in FIG. 19 (a), the upper structures are transparent to make it possible to see the relationship between the sensor chip 5 and the flow path that has the inflow opening 3a and the outflow opening 3b on the same end surface of the package, and in FIG. 19 (b) the description of the sensor chip 5 is omitted.

The spacer portion 22 has a uniform height dimension at (a uniform dimension in the depth direction of the square hole 5a), as illustrated in FIG. 19 (b), and is provided corresponding to each edge of the sensor chip 5, as illustrated in FIG. 19(a). Note that the spacer portion 22 is monolithically molded out of a ceramic material together with the substrate 2b. Note that even if the sensor chip 5 is pressed down into the square hole 5a that is illustrated in FIG. 19 (b) when electrically connecting of the electrodes of the substrate 2b and the electrodes of the sensor chip 5 that is mounted face-down in the square hole 5a, the effect of the spacer portion 22 fulfills the role of a stopper preventing that the sensor chip 5 from being pressed too far to the substrate 2b.

Furthermore, because the spacer portion 22 has a uniform height dimension, there will be no variability in the height direction of the sensor chip 5 that is mounted in the square hole 5a, so that the cross-sectional area of the flow path will be maintained uniformly. This makes it possible to produce uniform sensor characteristics. Note that insofar as the sensor is one wherein a sensor chip is mounted in a mounting hole portion of a package, the structure illustrated in FIG. 15, set forth above, can be applied also to sensors with structures other than that of the flow sensor 1.

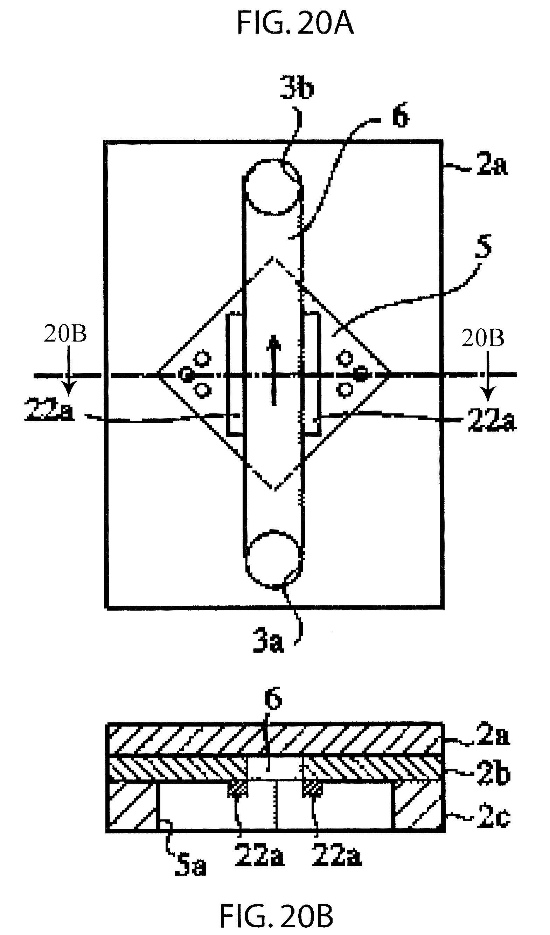

FIG. 20 is a diagram illustrating another structure for a spacer portion of a flow sensor according to the first form of embodiment, where FIG. 20 (a) shows a top view, and FIG. 20 (b) shows a cross-sectional diagram along the section F-F in FIG. 20 (a). Note that in FIG. 20 (a), the upper structures are transparent to make it possible to see the relationship between the sensor chip 5 and the flow path having the inflow opening 3a and the outflow opening 3b on the same side surface of the package, and the description of the sensor chip 5 is omitted in FIG. 20 (b).

The spacer portion 22a has a uniform height dimension (a uniform dimension along the direction of depth of the square hole 5a), as illustrated in FIG. 20 (b), and, as illustrated in FIG. 20 (a) is formed in the shape of an embankment of the trench 6 along the flow path. Note that the spacer portion 22a is also monolithically molded together with the substrate 2b from a ceramic material.

Even if the sensor chip 5 is pushed into the square hole 5a illustrated in FIG. 20(b) when electrically connecting the electrodes of the substrate 2b and the electrodes of the sensor chip 5 that is mounted face-down in the square hole 5a, the spacer portion 22a fulfills the role of a stopper, so that the sensor chip 5 will not be pressed to the substrate 2b more strongly than is allowed.

Because the spacer portion 22a also has a uniform height dimension, there will be no variability in the position, in the height direction, of the sensor chip 5 that is pressed into the square hole 5a, so the cross-sectional area of the flow path will be maintained uniformly. Doing so makes it possible to obtain uniform sensor characteristics. Furthermore, the spacer portion 22a that is formed in the shape of an embankment of the trench 6 has the function of a breakwater to prevent the insulating resin material that protects the connection portions, from the electrically conductive bonding material, from spreading into the flow path.

Note that while in the explanation above a case was shown wherein the sensor installation structure illustrated in FIG. 19 and FIG. 20 was applied to the flow sensor 1, it may also be applied to a sensor other than the flow sensor 1, insofar as the sensor has a flow path formed in a package, wherein a gas to be measured flows, between a sensor surface and a substrate surface facing thereto within the package.

### (7) TEMPERATURE CONTROLLING MECHANISM

In a thermal sensor, if the flow of the gas to be measured is stopped so that the gas becomes stationary in the flow path within the package, then condensation or moisture may adhere to the sensor surface, which can disrupt the relationship with the temperature of the gas to be measured at the surface of the sensor, damaging the accuracy of the sensor in terms of the gas flow, causing the output of the sensor to be incorrect. Given this, in the flow sensor 1 according to the first form of embodiment, heater patterns are formed in order to heat the substrate that form the package, and the temperature is controlled based on the ambient temperature that is detected by a temperature detecting portion on the sensor chip 1.

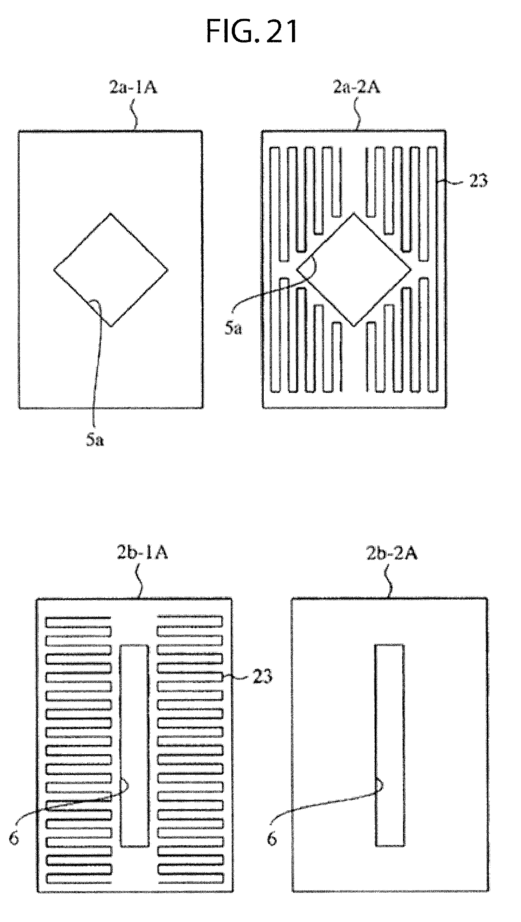

FIG. 21 illustrates the assembly process for a flow sensor that uses a substrate provided with a heater pattern, where the package is structured through stacking sequentially the ceramic substrates 2a-1A, 2a-2A, 2b-1A, and 2b-2A. A square hole 5a for inserting the sensor chip 5 is formed in the substrate 2a-1A. Furthermore, a heater pattern 23 is formed around this square hole 5a, in addition to the square hole 5a in the substrate 2a-2A.

The substrate 2b-1A is a ceramic substrate provided with a trench 6 to serve as the flow path within the package, where a heater pattern 23 is formed in a zigzag pattern on both sides, in the lengthwise direction, of this trench 6. Furthermore, the substrate 2b-2a is a ceramic substrate without the heater pattern 23, where a trench 6 that serves as the flow path within the package is provided in the center thereof.

These substrates 2a-1A, 2a-2A, 2b-1A, and 2b-2A are stacked sequentially, and a ceramic substrate, not shown, provided with an inflow opening 3a and an outflow opening 3b for the flow path within the package, corresponding to the substrate 2c-2 in FIG. 12, is stacked on the substrate 2b-2A, and sintering and bonding is performed to structure a package for a sensor that is provided with a heater pattern 23 within the package wall. Note that electrolytic corrosion could occur if this heater pattern 23 were exposed to the flow path within the package, leading to a failure, and thus the heater pattern 23 is not formed in a place wherein the flow path will be formed when assembling the substrates.

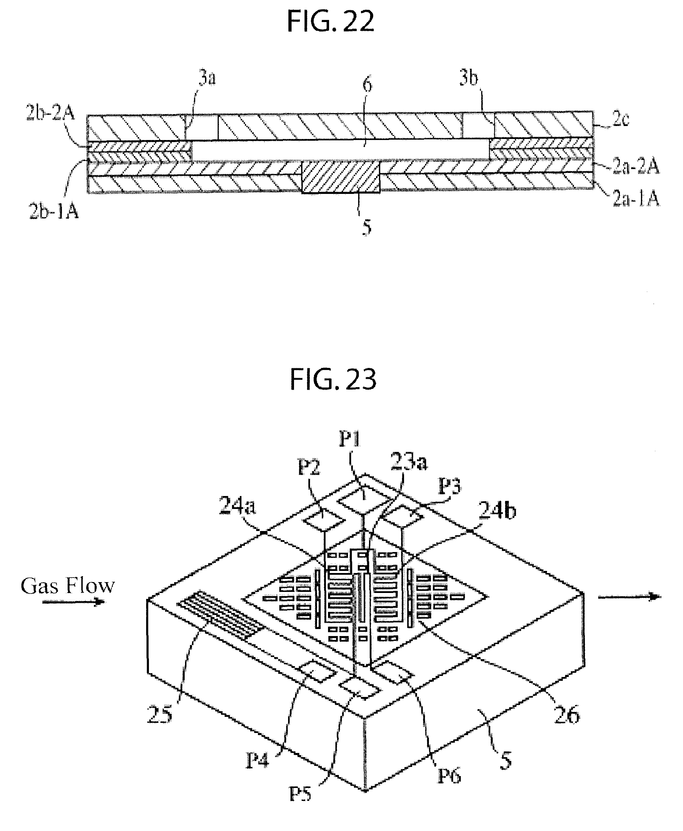

FIG. 22 is a cross-sectional drawing illustrating a flow sensor having a heater pattern, and, as with FIG. 1, illustrates a sensor provided with the inlet and outlet of the flow path on the same end surface of the package. While not shown explicitly in FIG. 22, the gap that is formed between the inner wall of the hole portion for housing the sensor chip provided in the package substrate and the side wall of the sensor chip 5 housed therein is filled with resin seal material in this flow sensor as well. Furthermore, FIG. 23 is an oblique view illustrating a sensor chip of a flow sensor according to the first form of embodiment. In FIG. 22, the substrates 2a-2A and 2b-1A are provided with a heater pattern 23, in the same way as in FIG. 21. The gas that is to be measured, which flows into the inlet 3a of the flow path within the package, passes through the flow path made from the trench 6, to flow out from the outlet 3b. Note that the gas that is to be measured, which flows into the flow path within the package, has the temperature thereof detected by a temperature detecting portion on the surface of the sensor.

Additionally, the sensor chip 5 that is illustrated in FIG. 2 is structured as in, for example, FIG. 23, provided with temperature sensors 24a and 24b, made from metal thin-film temperature-sensitive resistors that are formed on both sides of metal thin-film heaters 23a and 23a, an ambient temperature sensor 25 made from a metal thin-film temperature-sensitive resister, and electrode pads P1 through P6 for accessing the signals. Note that the sensor portion 26 is structured from the heaters 23a and the temperature sensors 24a and 24b.

When the sensor portion 26 is used in a gas flow speed meter, the heater 23a is driven so as to have a temperature that is uniformly higher than the ambient temperature that is measured by the ambient temperature sensor 25, where the temperature sensors 24a and 24b are driven with a constant current or constant voltage. When the speed of flow of the gas to be measured is zero, then the temperatures of the temperature sensors 24a and 24b will be identical, so there will be no difference in the resistance values of the temperature sensors 24a and 24b.

When the gas to be measured is flowing, then the temperature sensor 24a that is positioned upstream is cooled by the heat being carried away by the flow of gas towards the direction of the heater 23a. On the other hand, the temperature sensor 24b that is positioned downstream is heated by the flow of gas from the direction of the heater 23a.

As a result, there will be a difference between the resistance values of the temperature sensor 24a on the upstream side and the temperature sensor 24b on the downstream side, where the difference in the resistance values is detected as a difference in a voltage values, making it possible to calculate the velocity of flow b of the gas to be measured. This flow velocity b can be multiplied by the cross-sectional area S of the flow path to calculate the flow quantity Q of the gas to be measured.

Additionally, in the case wherein the sensor portion 26 is used in a gas thermal conductivity measurement, the heater 23a is driven so as to be at a temperature that is uniformly higher than the ambient temperature measured by the ambient temperature sensor 25, and the heater power Ph that is consumed by the heater 23a is calculated from the voltage and current in the heater at this time. The heater power Ph will vary depending on the thermal conductivity of the gas to which the sensor portion 26 is exposed, thus making it possible to calculate the thermal conductivity from the heater power Ph. Note that in the thermal conductivity measurement of the gas, there will be tolerance error when the flow speed is not zero; however, it is possible to check whether or not the flow speed is in a zero state by confirming that there is no difference in resistance values between the temperature sensors 24a and 24b on both sides of the heater 23a.

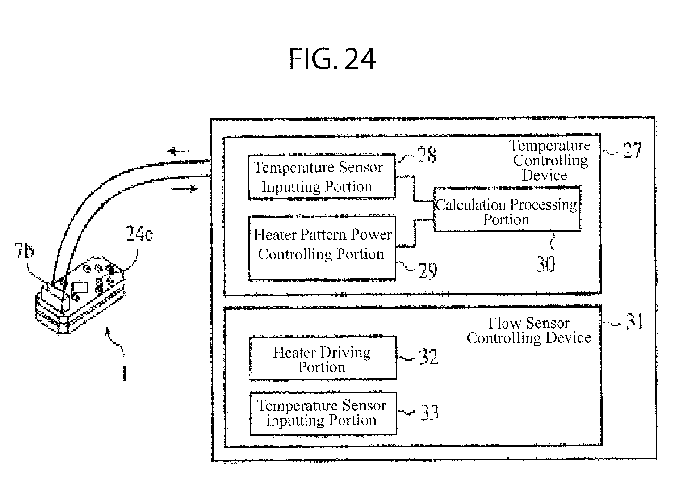

FIG. 24 is a diagram illustrating the structure of a temperature controlling device and a flow sensor controlling device for controlling a flow sensor having a heater pattern. The temperature controlling device 27 and the flow sensor controlling device 31 illustrated in FIG. 24 may be structured as separate devices that can communicate, or may be structured as a single functional module in a single device.

In FIG. 24, the temperature controlling device 27 is provided with a temperature sensor inputting portion 28, a heater pattern power controlling portion 29, and a calculation processing portion 30. The temperature sensor inputting portion 28 inputs the ambient temperature that is detected by the temperature sensor 24c that captures the temperature within the flow path through a connector 7b that connects to the outside of the flow sensor 1. The temperature sensor 24c illustrated in FIG. 24 uses a thermistor that is mounted on the end surface of the package of the flow sensor 1. Note that a thermocouple may be used instead of the thermistor as the temperature sensor 24c, or may be another temperature detector that can be mounted on the package end surface.

Additionally, along with the structure that uses the thermistor that is mounted on the package end surface of the flow sensor 1, such as described above, as the temperature sensor 24c, a pattern may be formed on the sensor surface that faces the flow path of the sensor chip 5, and the temperature sensor 24c may be mounted thereon, or may be mounted on the sensor front surface on the substrate side that serves as the back surface of the side that faces of the flow path. Note that when mounted on the sensor surface of the substrate side, the temperature sensor 24c captures the heat that flows from within the flow path through the sensor chip 5 and outputs the measured temperature as the temperature within the flow path.

The heater pattern power controlling portion 29 controls the amount of current to the heater pattern 23. The calculation processing portion 30 controls the heater pattern power controlling portion 29 based on the ambient temperature that is inputted from the temperature sensor inputting portion 28. Note that the temperature controlling device 27 can be achieved through the use of, for example, a normal temperature adjusting device under the control of a microcontroller. Additionally, all or part of the temperature controlling device 27 may be structured within the flow sensor 1.

Additionally, the flow sensor controlling device 31 is provided with a heater driving portion 32 and a temperature sensor inputting portion 33. The heater driving portion 32 not only controls the driving of the heater 23a of the sensor portion 26, but also has a function for monitoring the electric current value for the electric current that flows in the heater 23a. A temperature sensor inputting portion 33 measures the gas flow volume from the output of the temperature sensors 24a and 24b of the sensor portion 26. Note that the flow sensor controlling device 31 can be achieved through the use of a controlling device, or the like, under the control of a microcontroller. Furthermore, all or part of the flow sensor controlling device 31 may be structured within the flow sensor 1.

The operation will be explained next. The temperature controlled by the temperature controlling device 27 will be explained first.
The temperature sensor inputting portion 28 of the temperature controlling device 27 inputs the temperature within the flow path (the temperature within the substrate) of the flow sensor 1 that is detected by the temperature sensor 24c, through the connector 7b for connecting to the outside. When the temperature within the flow path (the temperature within the substrate) is inputted from the temperature sensor inputting portion 28, the calculation processing portion 30 compares to a predetermined use temperature that is stored in an internal memory, and, based on the comparison results, controls the heater pattern power controlling portion 29 so that the temperature within the substrate will go to the aforementioned use temperature.

The heater pattern power controlling portion 29 controls the electric current to the heater pattern 23 of the flow sensor 1 in accordance with a control signal from the calculation processing portion 30. This maintains the temperature within the substrate of the flow sensor 1 at the predetermined use temperature. This use temperature is set to a value that is higher than the temperature of the gas to be measured, in consideration of the occurrence of condensation on objects wherein the surface temperature is colder than the gas that is adjacent thereto.

This type of control not only prevents condensation on the surfaces of the sensor chip 5, but also maintains a uniform ambient temperature, thereby reducing the effect of variability in the ambient temperature, thereby enabling improved sensor accuracy.

Additionally, in terms of the temperature controlling method by the calculation processing portion 30, the use temperature may be controlled constantly based on the temperature that is inputted from the temperature sensor inputting portion 28, or the temperature may be controlled selectively in response to the temperature of the gas or the flow path, and the heating may be driven either continuously or discontinuously.

Moreover, because dust is less likely to adhere to warm places, the temperature control may prevent the adhesion of dust to the inner wall of the flow path by constantly heating the flow sensor 1.

The process for recovering from a condensation state, through the flow sensor controlling device 31, will be explained next.
The heater driving portion 32 of the flow sensor controlling device 31 determines that condensation has occurred in the sensor portion 26 of the sensor chip 5 when an increase in the value of the electric current flowing in the heater 23a of the sensor portion 26 exceeds a predetermined threshold value. This causes the process for recovering from the condensation state to commence. Note that, to make the determination that there is condensation, the methods for identifying condensation may use other well-known technologies for identifying condensation in addition to monitoring the value of the electric current in the heater 23a as described above, such as using a method for identifying condensation from the change in inductance between exposed interlaced electrodes.

When the occurrence of condensation has been identified, then the heater driving portion 32 provides notification to this effect to the calculation processing portion 30 of the temperature controlling device 27. The calculation processing portion 30, when notification that condensation has occurred has been received, switches the operation of the heater pattern power controlling portion 29 to a heater pattern high-temperature sequence. In the high-temperature sequence process, the heater pattern power controlling portion 29 performs control of the electric current to the heater pattern 23 to perform heating over a predetermined time interval to a temperature that is higher than that of the normal heating status for causing the temperature within the package of the flow sensor 1 to be uniform.

When the aforementioned specific time interval has elapsed, then the calculation processing portion 30 controls the heater pattern power controlling portion 29 to return, to the normal value, the magnitude of the electric current to the heater pattern 23, to cause the temperature to go to the normal set temperature. At this time, the calculation processing portion 30 measures the time that elapses after performing the process to return the temperature within the package to the normal set temperature, and if a predetermined amount of time expires, then provides notification to that effect to the flow sensor controlling device 31.

The heater driving portion 32 of the flow sensor controlling device 31, upon receipt of this notification, monitors the value of the electric current that flows in the heater 23a of the sensor portion 26 to determine whether or not the threshold value described above is exceeded. If, at this time, the value of the electric current flowing in the heater 23a is less than the threshold value, then a determination is made that there has been a recovery from the condensation, but if still greater than the threshold value, then the recovery process described above is repeated. This type of control is able to drive off adhered moisture through heating when there is condensation on the surface of the sensor, to attempt to restore the sensor characteristics.

Given the first form of embodiment, as set forth above, a flow path is provided within the package for introducing the gas to be measured to the sensor chip 5, having an inlet 3a and an outlet 3b for the gas to be measured on the same flat end surface of the package, and thus only one end surface of the package needs to be sealed at the time of mounting, and the sealing can be done easily because the surface is flat. Additionally, because the other surfaces of the package can be used, there is flexibility in the installation structure, making it possible to achieve miniaturization.

Furthermore, given the first form of embodiment, spacer portions 22 and 22a are provided, for defining the position of the sensor chip 5 in the direction of depth of the square hole 5a, on the substrate 2b surface within the package, facing the sensor surface of the sensor chip 5 that is mounted within the square hole 5a of the package, and thus the variability of the sensor chip 5 in the direction of height is controlled, making it possible to obtain uniform sensor characteristics.

Furthermore, while, given the first form of embodiment, the mounted sensor chip 5 protrudes from a step surface, a square hole 5A, having a depth dimension so that the sensor chip 5 will not protrude to the outside surface of the package, may be provided to facilitate the operations to rework the mounting position of the sensor chip 5, and to prevent incursion of the resin seal material 14 onto the substrate 2a surface. Furthermore, the use of a thixatropic material as the resin seal material 14 makes it possible to achieve both the sealing of the sensor chip 5 and a uniform flow path cross-sectional area through filling the seal material 14 into the gap between the side surface of the sensor chip 5 and the inner wall of the square hole 5A when the sensor chip 5 is fitted into the square hole 5A.

Additionally, given the first form of embodiment, a heater pattern 23 is provided on at least one of the substrates that structure the package, and the magnitude of the electric current to the heater pattern 23 is controlled in accordance with the ambient temperature of the sensor chip 5 within the package, to control the temperature within the package, and thus even if the flow of the gas to be measured were to stop to cause the gas within the flow path to be stationary, it is still possible to prevent condensation and adhesion of moisture to the surface of the sensor, and even if there were condensation on the sensor, it is possible to drive off the adhered moisture to attempt to restore the sensor characteristics, and also possible to improve the sensor accuracy through controlling the ambient temperature so as to be uniform.

Note that while in the first form of embodiment an example was illustrated wherein ceramic substrates were used as the substrates for structuring the package, resin the substrates may be used instead, insofar as the material is one wherein the sensor package can be structured through bonding together a plurality of substrates.

Furthermore, while in the first form of embodiment, set forth above, the structure illustrated in FIG. 3 was given as an example of a sensor chip 5, sensor chips of other structures may also be used, insofar as there is no deviation from the spirit or intent of the present invention.

### POTENTIAL FOR USE IN INDUSTRY

The flow sensor according to the present invention not only is able to connect to a pipe of a gas to be measured while maintaining a tight seal, but also has flexibility in the installation structure and enables miniaturization, and thus is applicable to flow meters that are used with narrow installation spaces and used under difficult operating conditions.

## Claims

1. A sensor comprising:
a sensor chip for detecting a physical quantity of a gas to be measured, and a package, structured by stacking a plurality of substrates and having a flow path within the package, wherein:
a heater pattern is provided on at least one substrate.

2. A sensor as set forth in Claim 1, wherein the package is structured from stacking together:
a first flat substrate wherein a hole portion for housing a sensor chip is formed;
a second flat substrate wherein hole portions are formed to form the flow path within the package for guiding, to the sensor chip, the gas to be measured; and
a third flat substrate wherein hole portions are formed, on the same end surface of the package, for an inlet and outlet of the gas to be measured.

3. A sensor as set forth in Claim 1, wherein the package is structured by stacking:
on a fourth flat substrate:
a fifth flat substrate wherein a hole portion is formed to become a flow path within the package, for guiding the gas to be measured to the sensor chip; and
a sixth flat substrate, having a step in an opening portion so that the sensor chip is fitted to the step so that the sensor surface will be on the flow path side within the package, so that the back surface of the sensor chip will be coplanar with the package end surface, and so that the opening portion that is not covered by the sensor chip will form hole portions that will be the inlet and the outlet for the gas to be measured, connected to the flow path within the package.

4. A temperature controlling method of the sensor as set forth in Claim 1, comprising:
a step for detecting the ambient temperature of the sensor chip in the package; and
a step for controlling the temperature within the package through controlling the magnitude of the electric current to a heater pattern in accordance with the ambient temperature of the sensor chip.

5. An aberration recovering method for a sensor as set forth in Claim 1, comprising:
a step for determining that there is condensation on the surface of the sensor, based on an output value that is obtained from the sensor chip within the package:
and, when it has been determined that there is condensation on the sensor chip:
a step for heating, for a predetermined time interval to a temperature that is higher than the normal set temperature, the package by controlling the magnitude of the electric current to the heater pattern; and
a step for ensuring that the condensation has been eliminated, based on an output value that is obtained from the sensor chip that has returned to the set temperature after a predetermined amount of time has elapsed.
